# EUROPÄISCHE PATENTSCHRIFT

(11) **EP 3 730 433 B1**
(45) Veröffentlichungstag und Bekanntmachung des Hinweises auf die Patenterteilung: **30.04.2025**
(21) Anmeldenummer: 19207984.6
(22) Anmeldetag: 08.11.2019
(51) Int. Cl.: B65G 47/90, B65G 47/91, B65G 59/02, B65G 61/00, H01R 12/71, H01R 13/11, H01R 12/58

(54) **DEPALETTIERANORDNUNG MIT EINER VORRICHTUNG ZUM DEPALETTIEREN VON STAPELBAREN STÜCKGUTGEBINDEN UND VERFAHREN ZUM DEPALETTIEREN VON STAPELBAREN STÜCKGUTGEBINDEN**
DEPALETTING ARRANGEMENT WITH A DEVICE FOR DEPALETTING STACKABLE PIECE GOODS AND METHOD FOR DEPALETTING STACKABLE PIECE GOOD CONTAINERS
DISPOSITIF DE DÉPALETTISATION DOTÉ D'UN DISPOSITIF DE DÉPALETTISATION DE RÉCIPIENTS EMPILABLES POUR MARCHANDISE DE DÉTAIL ET PROCÉDÉ DE DÉPALETTISATION DE RÉCIPIENTS EMPILABLES POUR MARCHANDISE DE DÉTAIL

(30) Priorität: 25.04.2019 DE 102019110704; 18.10.2019 DE 102019128197
(43) Veröffentlichungstag der Anmeldung: 28.10.2020
(60) Teilanmeldung: 21156034.7
(73) Patentinhaber: Stöcklin Logistik AG, 4242 Laufen (CH)
(72) Erfinder: BEGERT, Urs, 2563 Ipsach (CH)
(74) Vertreter: Söllner, Udo

(56) Entgegenhaltungen:
- EP-A1- 0 849 199
- EP-A1- 2 384 864
- EP-A1- 2 441 709
- EP-A1- 3 020 515
- DE-A1- 1 907 109
- DE-A1- 102013 005 613
- DE-A1- 4 427 488
- DE-B4- 19 959 285
- US-A1- 2007 280 812
- US-A1- 2018 215 540

## Beschreibung

Die vorliegende Erfindung betrifft eine Depalettieranordnung mit einer Vorrichtung zum Depalettieren von stapelbaren Stückgutgebinden, wobei die Vorrichtung eine Halteeinrichtung mit daran angeordneten und zum lösbaren Saugeingriff mit einer Seitenwand des Gebindes ausgebildete Saugmittel und eine relativ zur Halteeinrichtung bewegbare Trageplatte zur Unterstützung des Gebindes aufweist, und eine Aufnahme mit mindestens einem Träger besitzt, an der die Halteeinrichtung angeordnet ist und die Vorrichtung eine Eingriffseinrichtung aufweist, die zum lösbaren Eingriff mit einer Ausnehmung einer Seitenwand des Gebindes ausgebildet ist, nach dem Oberbegriff des Anspruchs 1.

Bei den vorstehend erwähnten stapelbaren Stückgutgebinden kann es sich um Einweggebinde in der Form von beispielsweise Kartons handeln oder auch um Mehrweggebinde, welche aus einem Kunststoffwerkstoff oder auch aus Kartonmaterial gebildet sind oder auch um Klappboxen, also Gebinden mit einklappbaren Seitenwänden. Die Gebinde können grundsätzlich eine beliebige Art von Artikeln beinhalten, welche beispielsweise zum täglichen Gebrauch oder Verzehr vorgesehen sind.

Die vorstehend erwähnte Vielfalt an Gebinden ist oftmals im Bereich von Obst und Gemüse zu finden, Stückgütern also, die aufgrund ihrer Verderblichkeit im Verteilerzentrum schnell und trotzdem schonend gehandhabt werden müssen.

Der Umschlag oder die Handhabung der mit Obst und Gemüseprodukten oder Salaten befüllten Stückgutgebinden findet oftmals in Palettenlagern statt, dort werden die erwähnten Produkte in den erwähnten Gebinden auf standardisierten Paletten angeliefert und müssen zur weiteren Handhabung der Gebinde von den Paletten entpalettiert oder depalettiert werden. Zu diesem Zweck werden in den erwähnten Palettenlagern oder Verteilerzentren für Obst und Gemüse die Gebinde von Hand depalettiert, also manuell von der Palette abgenommen, und das abgenommene Gebinde sodann auf eine andere Palette abgelegt werden.

Es hat sich auch gezeigt, dass die Obst- und Gemüseprodukte in den Verteilerzentren in hinsichtlich der Abmessungen standardisierten Gebinden angeliefert werden, die üblicherweise eine Grundfläche von 600 mal 400 mm mit unterschiedlichen Höhen aufweisen oder eine Grundfläche von 300 mal 400 mm mit ebenfalls unterschiedlichen Höhen besitzen.

Einweggebinde besitzen dabei oftmals im Bereich der Seiten oder Querkanten angeordnete Zentrierlaschen oder auch Stapelnasen, welche jeweils im Eckbereich der Oberkanten der oftmals aus Kartonmaterial gebildeten Einweggebinde angeordnet sind.

Die Mehrweggebinde und Klappboxen besitzen dahingehend oftmals in den Seitenwänden oder Querwänden ausgebildete Handgriffausnehmungen oder Griffmulden, mit denen diese Mehrweggebinde und Klappboxen manuell angehoben werden können.

Eine zusätzliche Problematik besteht bei den erwähnten Obst- und Gemüseprodukten darin, dass diese oftmals einen hohen Feuchteanteil aufweisen, was dafür sorgt, dass aus Kartonmaterial gebildete Gebinde beim Depalettieren von der Unterseite her unterstützt werden müssen, um eine Beschädigung des Gebindes zu vermeiden. Aber auch andere, in den Stückgutgebinden mit auch von den genannten Abmessungen abweichenden Abmessungen enthaltene Artikel, wie beispielsweise Schokolade, Fleisch, Fisch und Wurstwaren oder andere Lebensmittel oder auch Drogerieartikel oder dergleichen müssen bei der Handhabung der Stückgutgebinde mit Vorsicht behandelt werden, um die Inhalte nicht zu beschädigen, was auch voraussetzt, dass die Beschädigung des Gebindes an sich vermieden werden muss.

Anhand der DE 199 59 285 B4 sind ein Vakuum-Greifsystem zum Greifen eines Objekts und Handhabungsgerät zum Handhaben des Objekts bekannt geworden. Bei dem hier beschriebenen bekannten Vakuumgreifsystem ist an einem Ausleger eines Manipulators in der Form eines Industrieroboters ein Saugkopf mit mehreren Saugmitteln beschrieben, der an einer Seitenwand eines zu manipulierenden Objekts angesetzt wird und dieses mittels einer durch die Erzeugung von Unterdruck herbeigeführten Haltekraft fixieren kann. Zur weiteren Stabilisierung und Fixierung des zu manipulierenden Objekts besitzt dieses bekannte Vakuumgreifsystem im rechten Winkel zu dem Saugkopf angeordnet einen zweiten Saugkopf, der an der Oberseite oder Deckseite des zu manipulierenden Objekts in Anlage gebracht werden kann, um durch die Erzeugung von Unterdruck im Bereich des zweiten Saugkopfes eine Hebekraft auszuüben.

Das so angehobene Objekt kann dann stabilisiert werden, indem ein mechanischer Untergreifer in den Zwischenraum zwischen dem angehobenen Objekt und dem darunter befindlichen Objekt geschoben wird.

Dieses bekannte Vakuumgreifsystem eignet sich nicht zum Depalettieren von Gebinden mit Obst- und Gemüseprodukten, da die Gebinde, in denen die Obst- und Gemüseprodukte in den Verteilerzentren auf Paletten angeliefert werden, keine Oberseiten aufweisen, an denen der zweite Saugkopf angeordnet werden könnte, sondern die Obst- und Gemüseprodukte aufnehmenden Gebinde oben beziehungsweise an der Oberseite regelmäßig offen sind.

Anhand der EP 2 874 925 B1 ist ein Greiferkopf zum Transport von Stückgutgebinden bekannt geworden, der eine Saugleiste aufweist, die mit einer Seitenwand des zu manipulierenden Gebindes in Kontakt gebracht werden kann, um durch die Erzeugung von Unterdruck eine Hebekraft auf das Stückgutgebinde auszuüben, um einen Zwischenraum zwischen dem Stückgutgebinde und dem darunterliegenden Gebinde zu schaffen, in den eine Trageplatte zur Unterstützung des zu manipulierenden Gebindes von unten her eingebracht werden kann.

Anhand der US 2007/0280812 A1 ist ein mit einer Vakuum Klemmzange ausgestattetes Handhabungsgerät bekannt geworden.

Anhand der EP 2 441 709 A1 ist eine Vorrichtung einer Depalettieranordnung nach dem Oberbegriff des Anspruchs 1 bekannt geworden.

Anhand eines ebenfalls bekannt gewordenen Greifersystems mit einem Industrieroboter mit Ausleger, an dem seitlich verstellbare Druckplatten angeordnet sind, ist bereits versucht worden, Stückgutgebinde zu depalettieren. Dieses bekannte Greifersystem ist aber aufgrund der Tatsache, dass das Stückgutgebinde über eine auf die Seitenwände des Gebindes von den Druckplatten ausgeübte Klemmkraft gehalten wird, nicht zum Depalettieren von Obst- und Gemüseprodukte enthaltenden Gebinden geeignet, da durch die Druckplatten die Einweggebinde gequetscht werden würden, was zu Druckstellen an den Obst- und Gemüseprodukten führen würde und diese dadurch beschädigt werden.

Stückgutgebinde der erwähnten Art werden oft in Hochregallagern gelagert oder zwischengelagert, welche Regale oder Regalreihen zu beiden Seiten einer zum Betrieb eines Manipulators in der Form eines Roboters benötigten Lagergasse aufweisen, wobei der Manipulator von der Lagergasse ausgehend beide Regalreihen bedient.

Ausgehend hiervon liegt der vorliegenden Erfindung die Aufgabe zugrunde, eine Depalettieranordnung mit einer Vorrichtung zum Depalettieren von stapelbaren Stückgutgebinden zu schaffen, welche beispielsweise mit Obst- und Gemüseprodukten befüllt sind und die Stückgutgebinde sowohl in der Form von Einweggebinden als auch in der Form von Mehrweggebinden oder Klappboxen vorliegen können, welche in einer Lagergasse mit beidseits der Lagergasse angeordneten Produktreihen betrieben werden kann.

Die Erfindung weist zur Lösung dieser Aufgabe hinsichtlich der Depalettieranordnung die im Anspruch 1 angegebenen Merkmale auf. Vorteilhafte Ausgestaltungen der Depalettieranordnung sind in den weiteren Ansprüchen beschrieben.

Die Erfindung schafft eine Depalettieranordnung mit einer Vorrichtung zum Depalettieren von stapelbaren Stückgutgebinden, wobei die Vorrichtung eine Halteeinrichtung mit daran angeordneten und zum lösbaren Saugeingriff mit einer Seitenwand des Gebindes ausgebildete Saugmittel und eine relativ zur Halteeinrichtung bewegbare Trageplatte zur Unterstützung des Gebindes aufweist, und eine Aufnahme mit mindestens einem Träger besitzt, an der die Halteeinrichtung angeordnet ist und die Vorrichtung eine Eingriffseinrichtung aufweist, die zum lösbaren Eingriff mit einer Ausnehmung einer Seitenwand des Gebindes ausgebildet ist, wobei die Depalettieranordnung einen Manipulator mit einer Tragstruktur aufweist und an der Tragstruktur eine relativ dazu drehbar angeordnete Drehaufnahme angeordnet ist und die Vorrichtung an der Drehaufnahme relativ zum Manipulator bewegbar angeordnet ist, wobei die Eingriffseinrichtung an der Aufnahme angeordnet ist und relativ zur Trageplatte in Hochachsrichtung bewegbar ausgebildet ist.

Die so geschaffene Depalettieranordnung besitzt also eine Tragstruktur in der Form beispielsweise eines Gestells, einer Aufnahme oder eines Aufbaus oder eines Rahmens oder eines Portals oder einer Gitterstruktur oder einer anderen Lastaufnahmestruktur, die ein Teil eines Manipulators in der Form eines Roboters, eines Portalroboters oder einer anderen steuerbaren Einheit sein kann, welche in einer Lagergasse einer Lageranordnung betrieben werden kann.

Die Tragstruktur ist also ganz allgemein zur Aufnahme einer nachfolgend noch näher beschriebenen Vorrichtung zum Depalettieren von stapelbaren Stückgutgebinden vorgesehen und kann Teil oder Einheit oder Bauteil eines Manipulators sein, wie vorstehend beschrieben worden ist.

Über die Anordnung der Vorrichtung zum Depalettieren von stapelbaren Stückgutgebinden an einer Aufnahme, welche eine Drehaufnahme oder ein Drehkopf sein kann, und zwar in einer Art und Weise, dass die Vorrichtung relativ zur Tragstruktur drehbar angeordnet ist, wird erreicht, dass die Vorrichtung zum Depalettieren von stapelbaren Stückgutgebinden beidseits der Lagergasse angeordnete, gelagerte oder zwischengelagerte Produktreihen mit den Stückgutgebinden erreichen kann und auf diese Weise an der Depalettieranordnung nicht beidseits der Tragstruktur eine Vorrichtung zum Depalettieren der stapelbaren Stückgutgebinde oder Vorrichtungen zum Depalettieren der stapelbaren Stückgutgebinde vorgesehen sein müssen, sondern mit einer Einheit oder einer Baugruppe, welche die Vorrichtung zum Depalettieren der Stückgutgebinde oder Vorrichtungen zum Depalettieren der Stückgutgebinde umfasst, die Lagerreihen mit Stückgutgebinden beidseits der Lagergasse von der einen Einheit oder Baugruppe erreicht oder erfasst oder bedient werden können.

Um zu erreichen, dass die Vorrichtung zum Depalettieren der Stückgutgebinde oder die Vorrichtungen zum Depalettieren der Stückgutgebinde die Stückgutgebinde jeweils von der Zugriffsseite aus erreichen können, kann die an der Drehaufnahme vorgesehene Vorrichtung zum Depalettieren der Stückgutgebinde beziehungsweise können die an der Drehaufnahme vorgesehenen Vorrichtungen zum Depalettieren der Stückgutgebinde mittels der Drehaufnahme zu den Stückgutgebinden hin gedreht werden.

Wenn also zunächst erste Stückgutgebinde auf einer ersten Seite der Lagergasse depalettiert werden und zu diesem Zweck die Drehaufnahme mit der Vorrichtung zum Depalettieren der Stückgutgebinde beziehungsweise den Vorrichtungen zum Depalettieren der Stückgutgebinde zu dieser ersten Seite der Lagergasse hin ausgerichtet ist, kann die Drehaufnahme zu einer zweiten Seite der Lagergasse hin um 180 Grad gedreht werden, um die Vorrichtung zum Depalettieren der Stückgutgebinde oder die Vorrichtungen zum Depalettieren der Stückgutgebinde zur zweiten Seite der Lagergasse hin auszurichten, so dass dann zweite Stückgutgebinde auf der zweiten Seite der Lagergasse mit der Vorrichtung zum Depalettieren der Stückgutgebinde oder den Vorrichtungen zum Depalettieren der Stückgutgebinde erreicht und depalettiert werden können.

Es ist nach einer Weiterbildung der Erfindung auch vorgesehen, dass die Tragstruktur einen in Hochachsrichtung der Tragstruktur bewegbaren Träger aufweist, an dem ein in Längsrichtung des Trägers bewegbarer Tragarm angeordnet ist und die Drehaufnahme mit der Vorrichtung relativ zum Tragarm drehbar angeordnet ist.

Über den in Hochachsrichtung bewegbaren Träger kann ein von der Vorrichtung zum Depalettieren der Stückgutgebinde aufgenommenes Stückgutgebinde in Hochachsrichtung der Tragstruktur des Manipulators bewegt werden, um nach dem Depalettieren beispielsweise auf einer Fördereinrichtung abgelegt zu werden, um von dieser Fördereinrichtung zu einem anderen Handhabungsort befördert zu werden.

Über den in Längsrichtung des Trägers bewegbaren Tragarm kann die Drehaufnahme mit der Vorrichtung oder den Vorrichtungen aus der Lagergasse in Richtung zu den ersten oder zweiten Lagerreihen mit den Stückgutgebinden bewegt werden, sodass die Vorrichtung beziehungsweise die Vorrichtungen die Stückgutgebinde auf beiden Seiten der Lagergasse erreichen können, um diese von den Paletten abzunehmen und beispielsweise der vorstehend erwähnten Fördereinrichtung zuzuführen.

Es ist nach einer Weiterbildung der Erfindung vorgesehen, dass die Drehaufnahme mit der Vorrichtung oder den Vorrichtungen relativ zur Tragstruktur in Längsrichtung der Tragstruktur bewegbar ausgebildet ist.

Damit wird erreicht, dass die Drehaufnahme mit den an der Vorrichtung beziehungsweise den Vorrichtungen angeordneten Stückgutgebinden von den beidseits der Lagergasse angeordneten Lagerreihen, von denen die Stückgutgebinde soeben abgenommen worden sind, also depalettiert worden sind, beispielsweise in die Mitte der Lagergasse bewegt werden kann, also relativ zum Tragarm und auch relativ zum Träger, sodass dann über eine Vertikalbewegung des Trägers mit dem Tragarm und der Drehaufnahme mit der Vorrichtung oder den Vorrichtungen und den depalettierten Stückgutgebinden die Stückgutgebinde von der Vorrichtung oder den Vorrichtungen auf die vorstehend erwähnte Fördereinrichtung abgegeben werden können, um zu dem ebenfalls erwähnten anderen Handhabungsort weiter bewegt werden zu können.

Zu diesem Zweck ist es von Vorteil und nach einer Weiterbildung der Erfindung vorgesehen, dass die Drehaufnahme mit der Vorrichtung relativ zum Tragarm in Längsrichtung des Tragarms bewegbar ausgebildet ist. Damit kann die Drehaufnahme mit der Vorrichtung oder den Vorrichtungen unabhängig von der Längsbewegung des Tragarms relativ zum Träger bewegt werden, sodass also eine Relativbewegung der Drehaufnahme relativ zur Tragstruktur und auch relativ zum Tragarm möglich ist.

Auch ist es nach einer Weiterbildung der Erfindung vorgesehen, dass die Tragstruktur wenigstens zwei benachbart zueinander angeordnete Vorrichtungen aufweist, welche gemeinsam oder getrennt voneinander betätigbar ausgebildet sind.

Es können also an der Tragstruktur zwei oder auch mehr als zwei Vorrichtungen zum Depalettieren von Stückgutgebinden benachbart zueinander angeordnet sein, welche also auch an der Drehaufnahme angeordnet sein können und diese Vorrichtungen können zum Depalettieren der Stückgutgebinde gemeinsam oder getrennt voneinander betätigt werden. Damit kann erreicht werden, dass beispielsweise bei zwei benachbart zueinander angeordneten Vorrichtungen zum Depalettieren der Stückgutgebinde beide Vorrichtungen gemeinsam betätigt werden können, um gleichzeitig zwei Stückgutgebinde oder auch mehrere nebeneinander angeordnete Stückgutgebinde zu depalettieren oder auch erreicht werden, dass von den beiden oder mehreren benachbarten Vorrichtungen zum Depalettieren der Stückgutgebinde nur eine einzelne oder einzelne der mehreren Vorrichtungen zum Depalettieren der Stückgutgebinde betätigt werden, also eine gezielte Auswahl der Vorrichtungen zum Depalettieren der Stückgutgebinde ermöglicht ist.

Es ist nach einer Weiterbildung der Erfindung auch vorgesehen, dass der Manipulator relativ zu einer den Manipulator tragenden Aufnahme bewegbar ausgebildet ist. Damit wird erreicht, dass der beispielsweise entlang einer Lagergasse bewegbare Manipulator in dieser mit einem Hallenboden als Aufnahme ausgestatteten Lagergasse entlang der Lagerreihe oder entlang der Lagerreihen verfahren werden kann, um Stückgutgebinde mit unterschiedlichen Inhalten oder Artikeln depalettieren zu können, und zwar aufgrund der Drehaufnahme zu beiden Seiten der Lagergasse.

Auch ist es nach einer Weiterbildung der Erfindung vorgesehen, dass der Tragarm und die Drehaufnahme unabhängig voneinander in Längsrichtung des Trägers bewegbar ausgebildet sind. Damit ist eine gezielte Ansteuerung der Drehaufnahme mit der Vorrichtung zum Depalettieren oder den Vorrichtungen zum Depalettieren der Stückgutgebinde möglich, und zwar unabhängig von der Längsbewegung des Tragarms am Träger der Tragstruktur des Manipulators.

Über die an der Vorrichtung zum Depalettieren vorgesehenen Saugmittel kann ein Saugeingriff mit einer Seitenwand eines Gebindes herbeigeführt werden, indem die Saugmittel an die Seitenwand herangeführt werden, bei der es sich um eine längs verlaufende oder auch um eine quer verlaufende Wand des Gebindes handeln kann, sodass die Saugmittel mit der Seitenwand in Kontakt kommen und über eine Unterdruckbeaufschlagung der Saugmittel eine Haltekraft zwischen der Seitenwand und den Saugmitteln aufgebaut wird, die ausreichend dimensioniert ist, sodass über eine Verlagerung der Saugmittel in Hochachsrichtung der Seitenwand betrachtet das Gebinde soweit einseitig angehoben wird, dass zwischen dem angehobenen Gebinde und dem darunter angeordneten Gebinde ein Zwischenraum ausgebildet wird.

Über dieses Anheben des Gebindes, bei dem es sich beispielsweise um ein Einweggebinde in der Form eines oben offenen Kartons handeln kann, in dem sich Obst oder Gemüse als Stückgut angeordnet befindet, wird ein Zwischenraum ausgebildet, der ausreichend dimensioniert ist, sodass die Trageplatte relativ zum angehobenen Gebinde verlagert werden kann, bis sie zumindest einen Teilbereich der Bodenfläche der Unterseite des Gebindes überlagert und auf diese Weise das Gebinde von unten her abstützt.

Eine translatorische Bewegung der Trageplatte mit dem darauf angeordneten Gebinde sorgt so dafür, dass das Gebinde von der gestapelten Anordnung der verbliebenen Gebinden separiert und beispielsweise auf einer Bandeinrichtung zum weiteren Transport abgelegt werden kann.

Wie es vorstehend bereits erwähnt wurde, können in dem Verteilerzentrum auch Stückgutgebinde in der Form von Mehrweggebinden oder von Klappboxen vorliegen, welche mit der erfindungsgemäßen Depalettieranordnung ebenfalls automatisch depalettiert werden können.

Zu diesem Zweck besitzt die Vorrichtung eine Eingriffseinrichtung, die zum lösbaren Eingriff mit einer Ausnehmung einer Seitenwand des Gebindes ausgebildet ist.

Bei der Ausnehmung kann es sich um eine Vertiefung in einer Seitenwand des Gebindes handeln, welche üblicherweise zur manuellen Handhabung des Gebindes vorgesehen ist, da das Gebinde bei der Befüllung des Gebindes vor Ort mit Obst- oder Gemüseprodukten oder Salaten, beispielsweise auf dem Feld oder im Gewächshaus, üblicherweise von Hand gehandhabt wird und somit solche Gebinde sowohl an den Längsseiten als an den Querseiten Ausnehmungen in der Form von Handgriffausnehmungen besitzen.

Die somit befüllten Gebinde werden im Verteilerzentrum als gestapelte Stückgutgebinde angeliefert, und zwar auf einer üblichen Palette angeordnet, so dass die Palette beispielsweise mit einem Gabelstapler transportiert werden kann.

Die auf diese Weise in Stapelanordnung vorliegenden Stückgutgebinde können mit der nach der hier ebenso vorgesehenen erfindungsgemäßen Vorrichtung ebenfalls automatisch depalettiert werden. Zu diesem Zweck kann die Eingriffseinrichtung einen lösbaren Eingriff mit einer Ausnehmung einer Seitenwand herbeiführen.

Die Eingriffseinrichtung ist erfindungsgemäß an der Aufnahme angeordnet und relativ zur Trageplatte in Hochachsrichtung bewegbar ausgebildet, sodass die Eingriffseinrichtung unter Aufrechterhaltung des lösbaren Eingriffs mit der Ausnehmung des Gebindes mit einer vorbestimmten Bewegung in Hochachsrichtung dafür sorgt, dass sich das Gebinde um eine der vorbestimmten Bewegung entsprechende Wegstrecke von dem darunter angeordneten Gebinde einseitig anheben lässt und auf diese Weise ein Zwischenraum zwischen der Unterseite des angehobenen Gebindes und der Oberseite des darunter befindlichen Gebindes ausgebildet wird.

In zu vorstehend bereits beschriebener Weise ähnlicher Weise kann dann eine Trageplatte in den Zwischenraum bewegt werden, sodass das angehobene Gebinde auf der Trageplatte zu liegen kommt beziehungsweise die Trageplatte das angehobene Gebinde von unten her unterstützt und so eine Trennung zwischen dem angehobenen Gebinde und dem vormals darunter angeordneten Gebinde herbeigeführt wird.

Nach einer Weiterbildung der Erfindung ist es vorgesehen, dass die Eingriffseinrichtung in mindestens eine Ebenenrichtung einer sich weitgehend im rechten Winkel zum Träger erstreckenden Ebene bewegbar ausgebildet ist. Auf diese Weise kann die Eingriffseinrichtung zum Eingriff mit der Ausnehmung der Seitenwand des Gebindes relativ zur Seitenwand bewegt werden. Auch ist die Eingriffseinrichtung in Hochachsrichtung bewegbar ausgebildet, so dass sie in Ausnehmungen von Gebinden mit unterschiedlicher Höhenerstreckung eingreifen kann. Die jeweilige Ausnehmung kann über eine Sensoreinrichtung erfasst werden.

Bei der Ausnehmung kann es sich um eine mit einem die Seitenwand vollständig durchsetzenden Durchlass versehene Handgriffausnehmung handeln, sodass die Eingriffseinrichtung die Handgriffausnehmung durchsetzen kann und eine beispielsweise in vertikaler Richtung erfolgende Verlagerungsbewegung der Eingriffseinrichtung zum Anheben des sich mit der Eingriffseinrichtung in Eingriff befindendem zu depalettierenden Gebinde führt. Durch dieses Anheben des entsprechenden Gebindes wird der bereits erläuterte Zwischenraum zwischen der Unterseite des angehobenen Gebindes und der Oberseite des darunter befindlichen Gebindes ausgebildet, in welchen die Trageplatte eingeführt werden kann.

Es ist nach einer Weiterbildung der Erfindung vorgesehen, dass die Eingriffseinrichtung ein Eingriffsmittel aufweist, welches zum lösbaren Eingriff mit einer Handgriffausnehmung einer Seitenwand des Gebindes ausgebildet ist. Bei dem Eingriffsmittel kann es sich beispielsweise um einen Greiffinger handeln, der in die Handgriffausnehmung eingeführt werden kann, sodass ein Anheben des Greiffingers zu einem einseitigen Anheben des Gebindes führt und auf diese Weise ein in einer Seitenansicht dreieckförmiger Zwischenraum ausgebildet wird, in den die Trageplatte eingeführt werden kann.

Im Gegensatz zu der vorstehend beschriebenen bekannten Vorrichtung mit seitlich relativ zum Gebinde verlagerbaren Druckplatten wird von der erfindungsgemäßen Vorrichtung keinerlei Seitenkraft auf das Gebinde ausgeübt, sodass es auch nicht zu einer Druckbeaufschlagung der im Gebinde befindlichen Obst- und Gemüseprodukte kommen kann und diese empfindlichen Waren daher auch keine Druckstellen bekommen. Dies gilt auch insbesondere bei Klappboxen als Gebinde, da ansonsten die Gefahr eines unbeabsichtigten Einklappens der Seitenwände dieser Gebinde besteht mit der Folge einer Beschädigung der in den Gebinden aufgenommenen Artikel.

Das von der Trageplatte von unten her unterstützte depalettierte Gebinde kann beispielsweise zu einem Transportband befördert werden und an dieses übergeben werden. Bereits während der Verlagerungsbewegung des Gebindes zum Transportband oder auch nach der Positionierung des Gebindes über dem Transportband kann das Eingriffsmittel aus dem lösbaren Eingriff mit der Ausnehmung der Seitenwand des Gebindes gelöst werden und sodann das depalettierte Gebinde auf dem Transportband abgesetzt werden.

Die erfindungsgemäße Vorrichtung ist auf diese Weise zur automatischen Depalettierung sowohl von Einweggebinden als auch von Mehrweggebinden ausgebildet und ebenso zur automatischen Depalettierung von Klappboxen, welche ebenfalls Ausnehmungen zur manuellen Handhabung besitzen, mit denen die Eingriffseinrichtung einen lösbaren Eingriff einnehmen kann. Auch Klappboxen können daher mit der erfindungsgemäßen Vorrichtung automatisiert depalettiert werden und zwar auf die gleiche Weise, wie dies vorstehend bereits mit Mehrweggebinden ausführlich erläutert wurde.

Auf diese Weise kann die erfindungsgemäße Vorrichtung alle bekannten Gebindearten automatisiert depalettieren, welche zum Transport von Obst- und Gemüseprodukten und zur Verteilung in Verteilerzentren und Weitertransport zur Verkaufsfiliale Verwendung finden.

Es ist nach einer Weiterbildung der Erfindung auch vorgesehen, dass die Vorrichtung ein Haltemittel aufweist, welches zur lösbaren Anordnung an einem oberen Randbereich des Gebindes ausgebildet ist. Mit diesem Haltemittel kann das Gebinde für beispielsweise den Transport von der Palette zum Förderband zwischen dem die Handgriffausnehmung durchsetzenden Greiffinger und dem darüber befindlichen Randbereich des Gebindes in der Form eines beispielsweise Mehrweggebindes oder einer Klappbox fixiert werden. Zu diesem Zweck übt der Greiffinger auf den unteren Randbereich der Handgriffausnehmung eine geringe Hubkraft aus und das Haltemittel übt auf den oberhalb der Handgriffausnehmung befindlichen Randbereich des Gebindes eine geringe Haltekraft aus, sodass auf diese Weise das Gebinde im Bereich des Randbereichs ähnlich einem Zangengriff geklemmt wird und während des Transports auf der Trageplatte zum Förderband auf der Trageplatte nicht verrutschen kann und somit eine Lagesicherung des Gebindes relativ zur Trageplatte oder Unterfahrplatte erreicht wird.

Es ist nach einer Weiterbildung der Erfindung vorgesehen, dass das Haltemittel eine streifenförmige oder leistenförmige Konfiguration aufweist und an einem zum Kontakt mit dem oberen Randbereich des Gebindes ausgebildeten Bereich mit einem elastisch ausgebildeten Auflagemittel versehen ist.

Der Randbereich des Gebindes in der Form beispielsweise einer Mehrwegbox oder einer Klappbox oder eines anderen Mehrweggebindes oberhalb der Handgriffausnehmungen weist regelmäßig eine streifenförmige oder leistenförmige Konfiguration auf und das Haltemittel besitzt daher ebenfalls eine streifenförmige oder leistenförmige Konfiguration, um mit dem Gebinderandbereich in Klemmeingriff oder Halteeingriff gebracht werden zu können.

Das elastisch ausgebildete Auflagemittel am Haltemittel greift daher von oben auf den Randbereich des Gebindes zu und sorgt aufgrund seiner elastisch nachgiebigen Konfiguration dafür, dass auch bei einer geringen Differenz zwischen der Sollposition und der Istposition des Haltemittels relativ zum oberen Randbereich ein sicheres Klemmen des Randbereichs des Gebindes zwischen der Eingriffseinrichtung in der Form beispielsweise des bereits erwähnten Greiffingers und des Haltemittels erreicht wird.

Es ist nach einer Weiterbildung der Erfindung auch vorgesehen, dass das Haltemittel an einem an der Aufnahme insbesondere in Hochachsrichtung bewegbar vorgesehenen Querträger angeordnet ist und mittels eines Aktuators zur lösbaren Anordnung an dem streifenförmigen oder leistenförmigen Randbereich des Gebindes betätigbar ist.

Durch die Anordnung des Haltemittels an dem in Hochachsrichtung der Aufnahme bewegbar vorgesehenen Querträger wird erreicht, dass unterschiedliche Gebindehöhen berücksichtigt werden können, indem die Höhe des jeweiligen Gebindes beispielsweise mittels einer Sensoreinrichtung erfasst wird oder aufgrund einem Steuerrechner bekannter vorbestimmter Höhe des Gebindes entsprechend positioniert wird und der Querträger demgemäß mit dem daran angeordneten Haltemittel entsprechend relativ zur Höhe der Seitenwand positioniert wird und sodann über ein Absenken des Haltemittels auf den oberen Randbereich des Gebindes ein sicheres Klemmen des Gebindes zwischen dem die Handgriffausnehmung durchsetzenden Greiffinger und dem mit dem elastisch ausgebildeten Auflagemittel versehenen Haltemittel erreicht wird.

Nach einer Weiterbildung der Erfindung ist es vorgesehen, dass das Haltemittel entlang einer weitgehend quer zur Aufnahme vorgesehenen Schwenkachse angeordnet ist und mittels eines Aktuators zur lösbaren Anordnung an dem streifenförmigen oder leistenförmigen Randbereich des Gebindes an der Schwenkachse verschwenkbar betätigbar ist.

Ähnlich wie dies soeben bereits erläutert wurde, kann auch auf diese Weise mit dem schwenkbar betätigbaren Haltemittel ein sicheres Klemmen des oberen Randbereichs des Gebindes zwischen dem Eingriffsmittel in der Form beispielsweise eines in der Ausnehmung des Gebindes angeordneten Greiffingers und dem leistenförmigen oder streifenförmigen Haltemittel erreicht werden, sodass das Gebinde während der Bewegung auf der Unterfahrplatte oder Trageplatte zum Transportband sicher gehaltert ist.

Bei dem Aktuator kann es sich beispielsweise um einen Elektromotor, einen Pneumatikzylinder oder eine andere Betätigungseinrichtung handeln, welche zum Absenken des Haltemittels auf den oberen Randbereich des Gebindes und zum Anheben des Haltemittels vom Randbereich ausgebildet ist.

Es ist nach einer Weiterbildung der Erfindung vorgesehen, dass das Haltemittel eine sich von der Aufnahme weg erstreckende Aufnahmeplatte aufweist, an welcher das Auflagemittel angeordnet ist. Über ein Absenken der Aufnahmeplatte mittels einer Vertikalbewegung oder einer Schwenkbewegung relativ zum Träger der Vorrichtung kann somit das Auflagemittel auf den oberen Randbereich des Gebindes abgesenkt werden und über eine Hubbewegung beziehungsweise Schwenkbewegung kann das Auflagemittel vom Randbereich wieder abgehoben werden, wenn das vereinzelte oder depalettierte Gebinde zum Weitertransport auf dem Bandförderer wieder freigegeben wird.

Als eine vorteilhafte Ausführungsform des Aktuators kann beispielsweise eine pneumatisch betätigbare Kolbenzylindereinheit vorgesehen sein, mittels der das Haltemittel an dem streifenförmigen oder leistenförmigen Randbereich des Gebindes lösbar in Anlage gebracht werden kann. Dadurch findet ein Klemmen des Randbereichs zwischen dem Eingriffsmittel und dem Haltemittel statt, ohne aber das Gebinde im Bereich der Seitenwand mit einer Druckkraft zu beaufschlagen, welche zu Druckstellen an dem im Gebinde befindlichen Obst oder Gemüse führen kann.

Nicht zur Erfindung gehört ein Verfahren der Depalettierung von stapelbaren Stückgutgebinden mittels einer vorstehend beschriebenen Depalettieranordnung, bei dem ein einen unteren Auflagebereich aufweisendes Gebinde mittels einer Eingriffseinrichtung entlang mindestens eines Teilbereichs des Auflagebereichs von einer Unterlage abgehoben wird und eine Trageplatte unter den abgehobenen Teilbereich bewegt wird, und ein körperlicher Kontakt des Teilbereichs zur Unterstützung des auf der Trageplatte mit dem Teilbereich aufliegenden Gebindes mit der Trageplatte herbei geführt wird, mit folgenden Schritten:
- des Herbeiführens eines lösbaren Eingriffs der Eingriffseinrichtung mit einer Ausnehmung einer Seitenwand des Gebindes
- Anheben des Gebindes mittels der Eingriffseinrichtung zur Trennung des Auflagebereichs des Gebindes zumindest entlang eines Teilbereichs von der Unterlage zur Herbeiführung eines Zwischenraums zwischen dem Auflagebereich und der Unterlage.

Bei der Unterlage kann es sich beispielsweise um ein unterhalb des zu depalettierenden Gebindes weiteres Gebinde handeln oder auch um eine andere Unterlage in der Form beispielsweise einer Palette oder ganz einfach einer Auflagefläche.

Über das Herbeiführen eines lösbaren Eingriffs der Halteeinrichtung mit der Ausnehmung einer Seitenwand des Gebindes wird erreicht, dass ein nachfolgendes Anheben des Gebindes mittels der Halteeinrichtung zur Trennung des Auflagebereichs des Gebindes zumindest entlang eines Teilbereichs von der Unterlage führt, wodurch ein Zwischenraum herbeigeführt wird und zwar zwischen dem Auflagebereich und der Unterlage, sodass dann eine Trageplatte oder Unterfahrplatte in diesem Zwischenraum bewegt werden kann, und sodann das zu depalettierende Gebinde auf der Trageplatte oder Unterfahrplatte aufliegt.

Es ist dabei nach einer Weiterbildung des Verfahrens vorgesehen, dass die Halteeinrichtung in die Ausnehmung diese zumindest teilweise durchsetzend eingeführt wird derart, dass das Gebinde mittels der Halteeinrichtung mindestens entlang des Teilbereichs von der Unterlage anhebbar ist.

Über dieses Anheben des Gebindes entlang des Teilbereichs wird ein zum Einführen der Trageplatte oder Unterfahrplatte ausreichender Zwischenraum zwischen der Unterseite des zu depalettierenden Gebindes und der Oberseite eines darunter angeordneten anderen Gebindes oder einer anderen Unterlage geschaffen.

Es ist nach einer Weiterbildung des Verfahrens vorgesehen, dass ein Haltemittel mit einem oberen Randbereich des Gebindes in lösbaren Kontakt gebracht wird. Dadurch kann ein Klemmen des oberen Randbereichs des Gebindes und damit des zu depalettierenden Gebindes zwischen der Halteeinrichtung, bei der es sich um eine Eingriffseinrichtung mit einem Greiffinger oder dergleichen handeln kann, und dem Haltemittel bewerkstelligt werden und auf diese Weise das Gebinde eine Lagesicherung erfahren, die in vorteilhafterweise während einer Bewegung des Gebindes zu einer Transporteinrichtung in der Form beispielsweise eines Bandförderers aufrechterhalten wird.

Der vorstehend erwähnte Greiffinger kann daher in eine am Gebinde vorgesehene Ausnehmung in der Form beispielsweise einer Handgriffausnehmung eingeführt werden und sodann das Haltemittel von oben auf den oberen Randbereich des Gebindes abgesenkt werden, wodurch ein Klemmen des oberen Randbereichs des Gebindes zwischen dem Greiffinger und dem Haltemittel herbeigeführt wird, ohne mit dem im Gebinde befindlichen Obst oder Gemüse in Kontakt zu kommen und auch ohne eine Druckkraftbeaufschlagung von Obst oder Gemüse durchzuführen.

Das so geklemmte Gebinde kann über eine Hubbetätigung der Halteeinrichtung in der Form beispielsweise des erwähnten Greiffingers zusammen mit dem auf dem Randbereich in Anlage befindlichen Haltemittel von der Unterlage getrennt werden und in den so geschaffenen Zwischenraum die Unterfahrplatte oder Trageplatte eingeführt werden. Alternativ hierzu kann die Unterfahrplatte oder Trageplatte auch in den durch Anheben der Halteeinrichtung geschaffenen Zwischenraum zwischen dem angehobenen Gebinde und dem darunter befindlichen Gebinde oder der Unterlage eingeführt werden und erst in einem Folgeschritt das Haltemittel auf den oberen Randbereich des Gebindes abgesenkt werden.

Sodann wird das auf der Trageplatte oder der Unterfahrplatte aufliegende Gebinde von der Unterlage separiert und kann in einem weiteren Schritt in auf der Trageplatte oder der Unterfahrplatte aufliegender Weise weitertransportiert werden.

Die Erfindung wird im Folgenden anhand der Zeichnung näher erläutert, diese zeigt in:
Fig. 1 vier Ansichten von unterschiedlichen Gebinden, welche zur Aufnahme von Obst- und Gemüseprodukten üblicherweise verwendet werden und mit der erfindungsgemäßen Depalettieranordnung und nach dem erfindungsgemäßen Verfahren automatisch depalettiert werden können;
Fig. 2 eine schematische Darstellung einer als Portalroboter ausgebildeten Ausführungsform der erfindungsgemäßen Depalettieranordnung in einem Verteilerzentrum mit jeweiligen Lagerplätzen mit unterschiedlichen Gebinden, wie sie in Fig. 1 der Zeichnung dargestellt wurden;
Fig. 2A eine detailliertere Darstellung der Depalettieranordnung nach Fig. 2 in einer Regalgasse mit beidseits der Regalgasse angeordneten Lagerreihen mit Stückgutgebinden;
Fig. 2B eine vergrößerte Darstellung eines Ausschnitts der Depalettieranordnung nach Fig. 2A;
Fig. 2C eine perspektivische Darstellung der Depalettieranordnung beim Depalettieren von Stückgutgebinden, die in einer hinteren Reihe eines Palettenstapels mit Stückgutgebinden angeordnet sind;
Fig. 2D eine Darstellung ähnlich derjenigen nach Fig. 2C, bei der die Vorrichtung zum Depalettieren mit der Drehaufnahme aus der auskragenden Stellung nach Fig. 2C bereits zurückgezogen worden ist;
Fig. 2E eine Darstellung ähnlich derjenigen nach Fig. 2D, bei der der Träger mit der Drehaufnahme zur Ablage der depalettierten Stückgutgebinde auf eine Fördereinrichtung abgesenkt wurde;
Fig. 3 eine perspektivische Darstellung einer schematisch dargestellten Ausführungsform einer Vorrichtung zum Depalettieren nach der vorliegenden Erfindung;
Fig. 4 eine Abfolge von acht schematischen Darstellungen 4.1, 4.2, 4.3, 4.4, 4.5, 4.6, 4.7 und 4.8, welche die Vorrichtung beim Depalettieren von Einweggebinden mit Stapelnasen im jeweiligen Eckbereich der Gebinde zeigt;
Fig. 5 eine Abfolge von acht schematischen Darstellungen 5.1, 5.2, 5.3, 5.4, 5.5, 5.6, 5.7 und 5.8, welche die Vorrichtung beim Depalettieren von Mehrweggebinden mit Handgriffausnehmungen an den Längswänden und an den Querwänden zeigt;
Fig. 6 eine schematische und perspektivische Darstellung einer Klappbox mit der erfindungsgemäßen Vorrichtung und sich mit der Handgriffausnehmung der Klappbox in Eingriff befindendem Greiffinger sowie mit am oberen Randbereich der Klappbox aufliegenden Haltemittel; und
Fig. 7 eine schematische Darstellung eines Mehrweggebindes mit dem bereits in Eingriff mit der Handgriffausnehmung befindendem Eingriffsmittel in einer Stellung, bevor sich das Haltemittel auf den oberen Randbereich absenkt.

Im Verteilerzentrum ankommende Gebinde mit Obst- und Gemüseprodukten werden auf Artikelpaletten angeliefert, die Gebinde aufweisen, welche mit jeweils gleichem Artikel befüllt sind, also beispielsweise Früchten oder auch Gemüseprodukten oder Salaten.

Diese Gebinde müssen aufgrund der Verderblichkeit der Waren rasch und ohne Beschädigung der Waren von den Artikelpaletten, bei denen es sich um standardisierte Paletten handeln kann, abgenommen werden, um in so vereinzelter Weise über einen Bandförderer oder dergleichen in ein Zwischenlager transferiert werden zu können.

Bislang wurden in den Verteilerzentren die Gebinde mit Obst- und Gemüseprodukten manuell depalettiert, da eine Vorrichtung zum automatischen Depalettieren von stapelbaren Stückgutgebinden bislang fehlte. Hier schafft die Erfindung nunmehr Abhilfe.

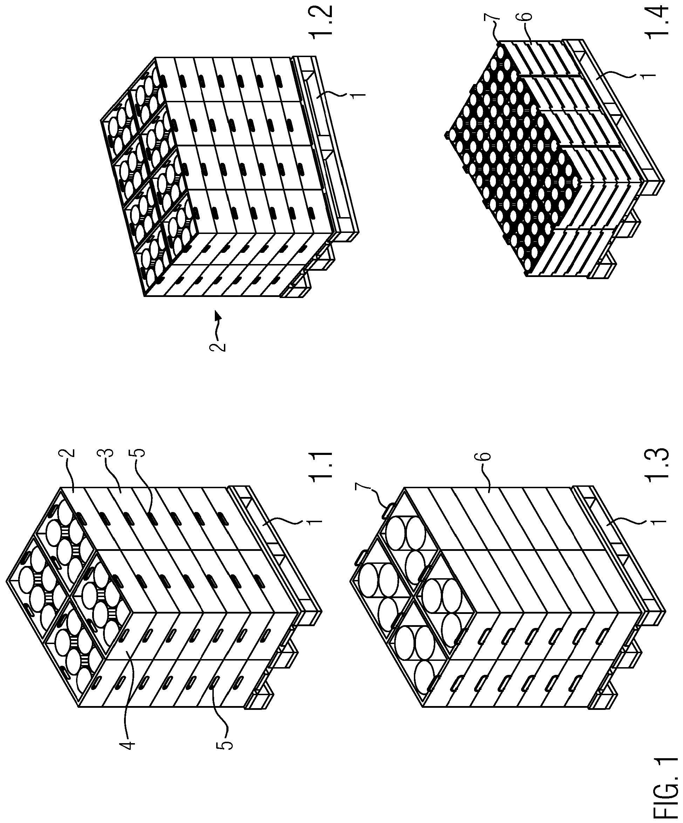

Fig. 1 der Zeichnung zeigt in vier Ansichten eine Vielzahl von Gebindetypen, die im Verteilerzentrum zu einer jeweiligen Artikelpalette zusammengefasst angeliefert werden und depalettiert werden müssen.

Die Darstellung 1.1 der Fig. 1 zeigt eine standardisierte Palette 1 mit daran angeordneten Mehrweggebinden 2, welche sowohl an der jeweiligen Längsseitenwand 3 als auch an der jeweiligen Querseitenwand 4 eine jeweilige Handgriffausnehmung 5 aufweisen, da die Gebinde beim Produzenten der Obst- und Gemüseprodukte befüllt und auf den Paletten 1 in Stapelanordnung angeordnet werden und dies manuell stattfindet.

Während die Darstellung 1.1 Gebinde mit einer Grundfläche von beispielsweise 600 mal 400 mm zeigt, die in unterschiedlichen Höhen vorliegen können, je nachdem welche Produkte in den Gebinden aufgenommen werden, zeigt die Darstellung 1.2 eine Palette 1 mit Gebinden 2 mit einer Grundfläche von jeweils 300 mal 400 mm, und in einer von den Gebinden 2 nach der Darstellung 1.1 abweichender Höhe des jeweiligen Gebindes 2.

Die Darstellung 1.3 der Fig. 1 zeigt wiederum eine Palette 1 mit Einweggebinden 6 mit Stapelnasen 7 an der jeweiligen Querseite des Gebindes 6 und einer Grundfläche von 600 mal 400 mm. Die Darstellung 1.4 der Fig. 1 zeigt eine Palette 1 mit Einweggebinden 1 mit einer jeweiligen Grundfläche von 300 mal 400 mm und geringerer Höhe als die Einweggebinde 6 nach der Darstellung 1.3 und Stapelnasen 7 im jeweiligen Eckbereich der Gebinde 6.

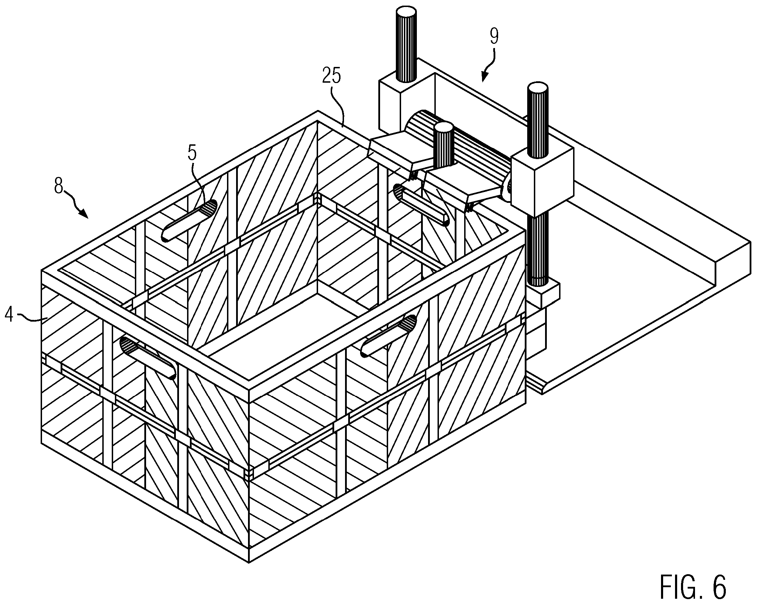

Fig. 6 der Zeichnung schließlich zeigt ein Mehrweggebinde in der Form einer Klappbox 8, sodass ersichtlich ist, dass im Verteilerzentrum unterschiedliche Gebindetypen mit Obst- und Gemüseprodukten angeliefert werden und es erheblichen Bedarf für eine Vorrichtung gibt, die zur automatisierten Handhabung der Depalettierung aller dargestellten Gebindetypen ausgebildet ist.

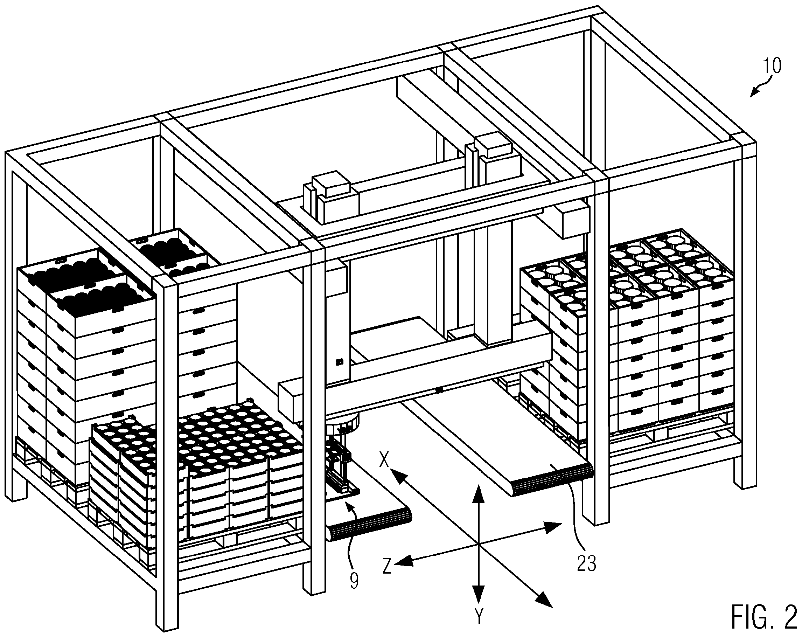

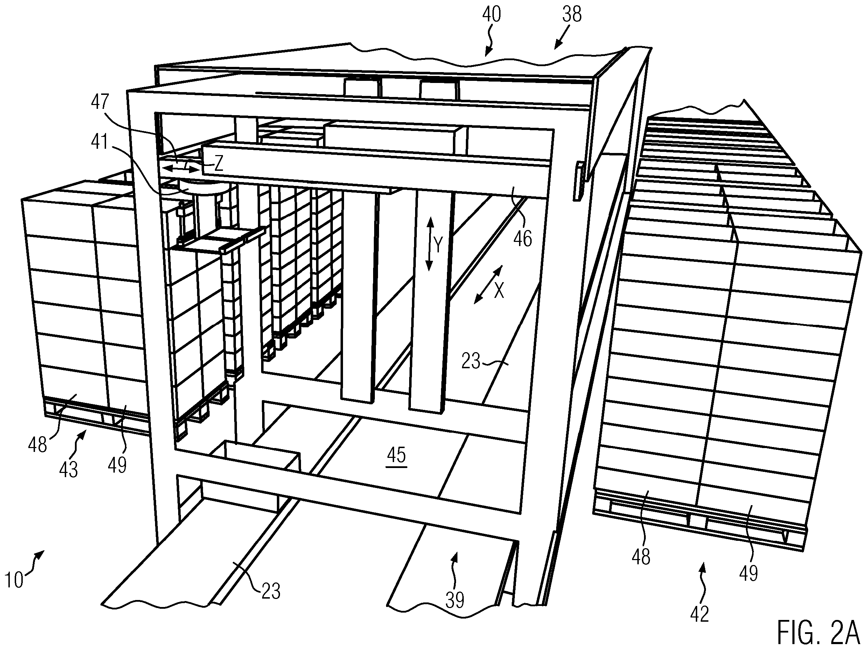

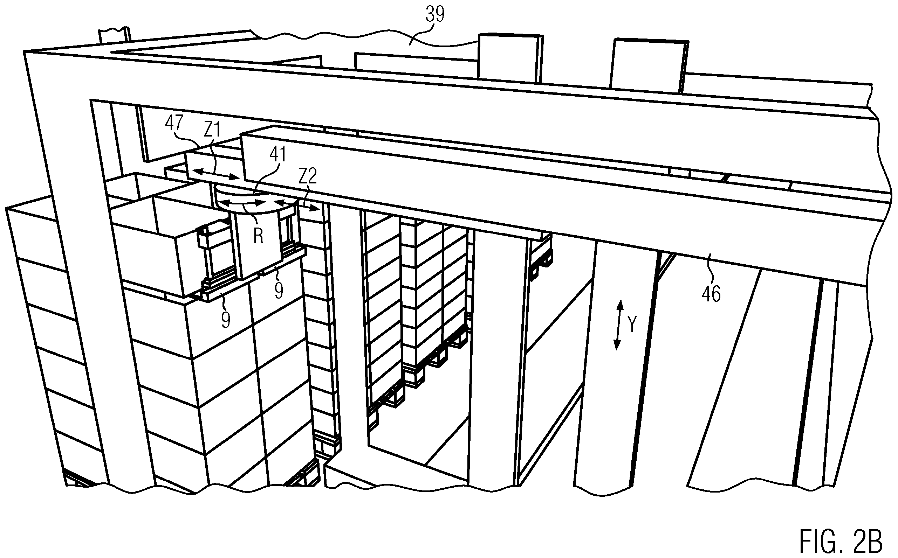

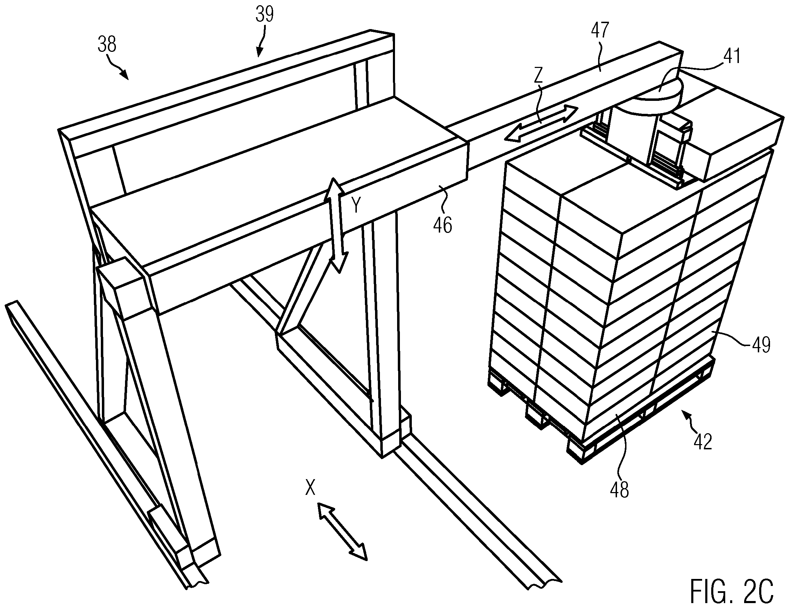

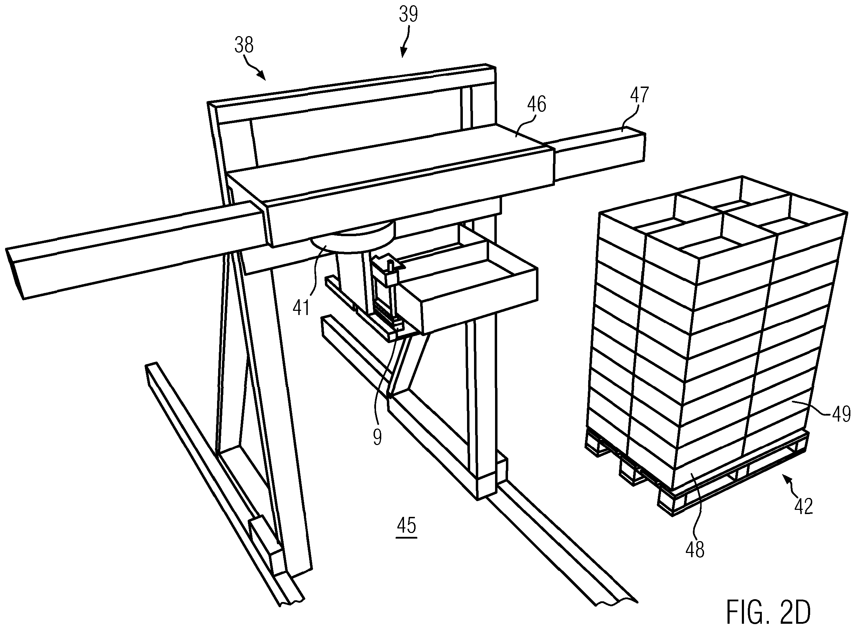

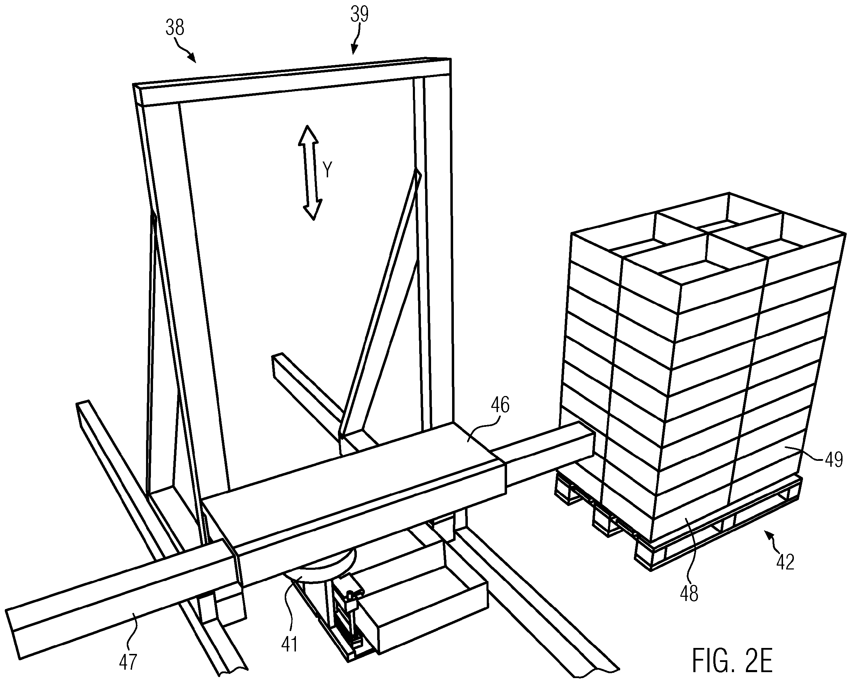

Fig. 2 der Zeichnung zeigt eine Ausführungsform einer Depalettieranordnung 38 mit einer Vorrichtung 9 zum Depalettieren, die in ein Portalrobotersystem 10 integriert ist, welches in einem in Fig. 2A ersichtlichen Verteilerzentrum mit Lagerreihen mit beidseitigen Palettenstapeln angeordnet werden kann und sowohl in Hochachsrichtung Y als auch in Querrichtung Z als auch in hierzu orthogonaler Richtung X entlang der Lagergasse verfahren werden kann, um Zugriff zu haben auf die dort zwischengelagerten Paletten mit den unter Bezugnahme auf die Fig. 1 erläuterten unterschiedlichen Gebindetypen.

Das Portalrobotersystem 10 nach Fig. 2 ist näher anhand von Fig. 2A dargestellt, sodass das Portalrobotersystem 10 die Depalettieranordnung 38 umfasst, welche eine Tragstruktur in der Form eines Portals 39 aufweist, wobei das Portalrobotersystem 10 als steuerbarer Roboter ganz allgemein als Manipulator 40 bezeichnet ist, der demgemäß die Depalettieranordnung 38 umfasst.

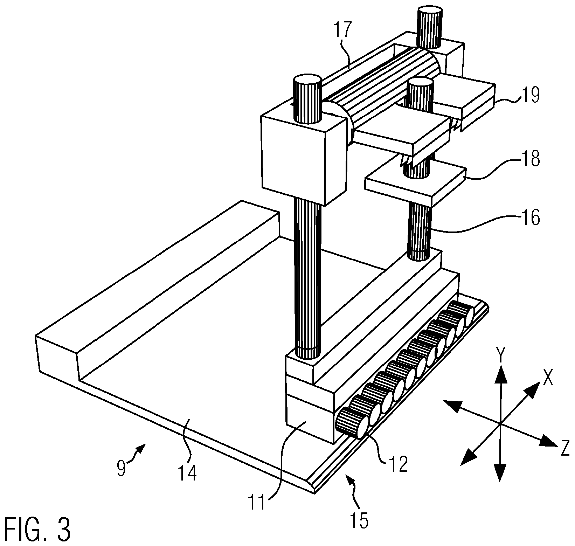

Wie es anhand von Fig. 2A der Zeichnung ersichtlich ist, ist die näher anhand von Fig. 3 der Zeichnung ersichtliche Vorrichtung 9 zum Depalettieren der Stückgutgebinde 2, 6, 8 an einer Drehaufnahme 41 angeordnet, sodass über die Drehbetätigung der Drehaufnahme 41 mit bei der dargestellten Ausführungsform zwei an der Drehaufnahme 41 angeordneten Vorrichtungen 9 zum Depalettieren der Stückgutgebinde beide Regalreihen 42, 43 mit Palettenstapeln 44 mit den Stückgutgebinden, welche sich entlang der Lagergasse 45 erstrecken, erreicht werden können.

Fig. 2B zeigt eine vergrößerte Darstellung eines Ausschnitts aus Fig. 2A mit der Drehaufnahme 41 mit den zwei daran angeordneten Vorrichtungen 9 zum Depalettieren der Stückgutgebinde.

Wie es ohne weiteres ersichtlich ist, ist an der Tragstruktur 39 in der Form des Portals ein in Hochachsrichtung Y der Tragstruktur 39 bewegbarer Träger 46 vorgesehen, der sich in Querrichtung der Tragstruktur 39 erstreckt und an dem ein Tragarm 47 vorgesehen ist, der in Z-Richtung relativ zum Träger 46 und damit relativ zur Tragstruktur 39 bewegbar ist, und, wie dies beispielsweise anhand von Fig. 2A der Zeichnung ersichtlich ist, ausgefahren werden kann, damit die Drehaufnahme 41 und damit die beiden Vorrichtungen 9 zum Depalettieren der Stückgutgebinde die Gebinde beidseits der Lagergasse 45 erreichen kann und zwar so, dass die in der ersten Reihe 48 angeordneten Gebinde der Regalreihe 42 und auch die in der zweiten Reihe 49 angeordneten Gebinde der Regalreihe 42 erreicht werden können und auch die Gebinde der beiden Reihen 48, 49 der zweiten Regalreihe 43 von der Drehaufnahme beziehungsweise dem Drehkopf 41 mit den beiden Vorrichtungen 9 zum Depalettieren der Stückgutgebinde erreicht werden können. Der Drehkopf beziehungsweise die Drehaufnahme 41 ist mittels eines am Drehkopf angeordneten Elektromotors und eines davon angetriebenen Zahnriemens um eine vertikale Achse an dem Tragarm 47 drehbar, wie dies durch den Pfeil R in Fig. 2B gezeigt ist.

Über eine axiale Bewegung des Tragarms 47 relativ zum Träger 46, also eine Bewegung des Tragarms 47 mit dem daran angeordneten Drehkopf 41 mit den Vorrichtungen 9 in Z-Richtung nach Fig. 2 der Zeichnung können also die Vorrichtungen 9 der Depalettieranordnung 38 alle Stückgutgebinde der Regalreihen 42, 43 erreichen und über eine Drehbetätigung des Drehkopfes 41 um 180 Grad relativ zum Tragarm 47 beziehungsweise zum Träger 46 können die Vorrichtungen 9 zum Depalettieren der Stückgutgebinde jeweils relativ zu den Stückgutgebinden ausgerichtet werden.

Wie es anhand von Fig. 2B der Zeichnung ersichtlich ist, ist die Verfahrrichtung des Tragarms 47 in Z-Richtung in beide Richtungen mit Z1 bezeichnet. Zum Verfahren des Tragarms 47 in beide Richtungen ist ein Antrieb mit einer Zahnstange mit einem Antriebsritzel vorgesehen.

Der Drehkopf 41 mit den beiden Vorrichtungen 9 kann relativ zum Tragarm 47 ebenfalls in Z-Richtung bewegt werden und zwar ebenfalls in beide Richtungen, welche in Fig. 2B mit Z2 bezeichnet ist. Die Verfahrbewegung des Drehkopfes 41 in Z2 Richtung kann also als Relativbewegung der Führungsbewegung des Tragarms 47 in Z1 Richtung überlagert werden und die Verfahrbewegung des Drehkopfes 41 ist auch unabhängig von der Verfahrbewegung des Tragarms in Z1 Richtung möglich. Zur Verfahrbewegung des Drehkopfes in Z2 Richtung ist ein Zahnriementrieb mit Elektromotor und Zahnriemen vorgesehen.

Fig. 2C der Zeichnung zeigt, dass der am Träger 46 in Z-Richtung bewegbare Tragarm 47 in Richtung zur Regalreihe 42 ausgefahren wurde und demgemäß auch der Drehkopf 41 mit den beiden Vorrichtungen 9 zum Depalettieren der Stückgutgebinde. Die in der ersten Reihe 48 der Regalreihe 42 platzierten Stückgutgebinde wurden bereits depalettiert und Fig. 2C der Zeichnung zeigt die Vorrichtungen 9 beim Depalettieren der in der zweiten Reihe 49 der Regalreihe 42 angeordneten Stückgutgebinde.

Fig. 2D der Zeichnung zeigt, dass der Drehkopf 41 mit den beiden Vorrichtungen 9 und den depalettierten Stückgutgebinden relativ zum Tragarm 47 und auch der Tragarm 47 selbst in die Richtung zur Regalgasse 45 verfahren worden ist und sich der Träger 46 in Y-Richtung noch in der Höhe gemäß Fig. 2C befindet.

In einem nächsten Schritt wird dann der Träger 46 mit dem Tragarm 47 und dem Drehkopf 41 und den Vorrichtungen 9 in Y-Richtung abgesenkt, sodass die depalettierten Stückgutgebinde auf die Förderbänder 23 abgesenkt werden können, und auf die Förderbänder 23 übergeben werden können, wie dies anhand von Fig. 2E der Zeichnung ersichtlich ist. Die Förderbänder 23 sind in Fig. 2 und Fig. 2A der Zeichnung ersichtlich.

Fig. 3 der Zeichnung zeigt eine schematische perspektivische Darstellung der Vorrichtung 9 mit dem bereits in Fig. 2 erläuterten Koordinatensystem.

Die Vorrichtung 1 weist eine Halteeinrichtung 11 auf, an dem eine Saugeinrichtung 12 in der Form von im Abstand zueinander angeordneter Saugmittel 13 vorgesehen sind, welche an eine Seitenwand eines Einweggebindes 6 herangeführt werden können, dort in Anlage gebracht werden können und über die Erzeugung von Unterdruck mittels einer nicht näher dargestellten Saugpumpe eine Saugkraft auf die Seitenwand des Einweggebindes 6 ausüben können, welche ausreichend dafür ist, dass das Einweggebinde unter Aufrechterhaltung der Saugkraft zur Herbeiführung eines Zwischenraums zwischen dem angehobenen Einweggebinde und dem darunter angeordneten Einweggebinde oder einer Unterlage in vorbestimmter Weise angehoben werden kann, sodass die Trageplatte oder Unterfahrplatte 14 in den Zwischenraum verfahren werden kann.

Darüber hinaus weist die Vorrichtung 1 auch eine Aufnahme 15 auf, an der zwei sich von der Trageplatte 14 im Winkel dazu weg erstreckende Träger 16 angeordnet sind, an denen ein Querträger 17 in Hochachsrichtung Y verschiebbar angeordnet ist.

An der Aufnahme 15 ist auch eine Eingriffseinrichtung 18 angeordnet, welche zur Herbeiführung einer lösbaren Eingriffsstellung mit einer Handgriffausnehmung eines Gebindes ausgebildet ist, wie dies nachfolgend noch erläutert werden wird.

Darüber hinaus besitzt die Vorrichtung 9 auch ein Haltemittel 19, welches zur lösbaren Anordnung oder Auflage an einem oberen Randbereich eines jeweiligen Gebindes ausgebildet und vorgesehen ist, wie dies nachfolgend noch näher erläutert werden wird.

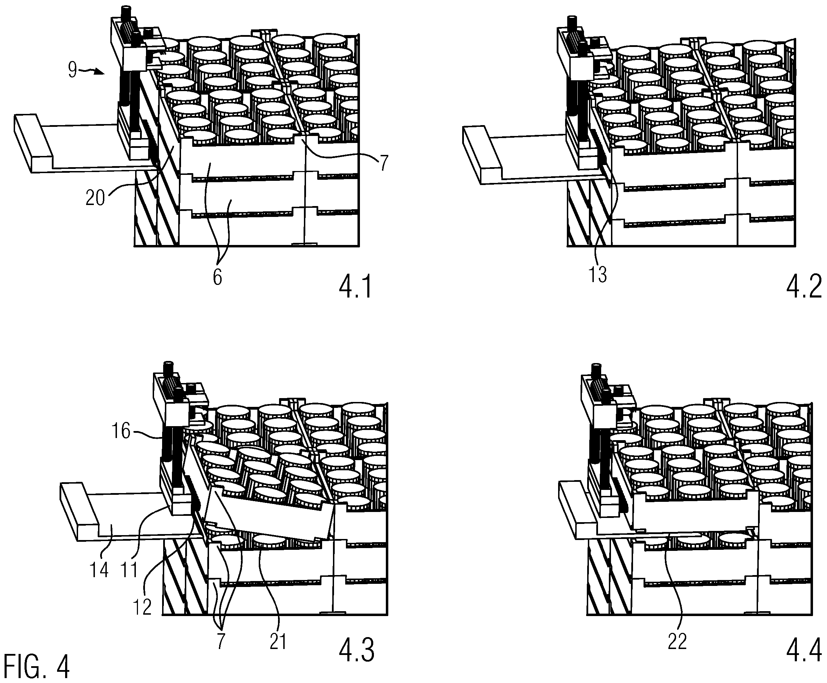

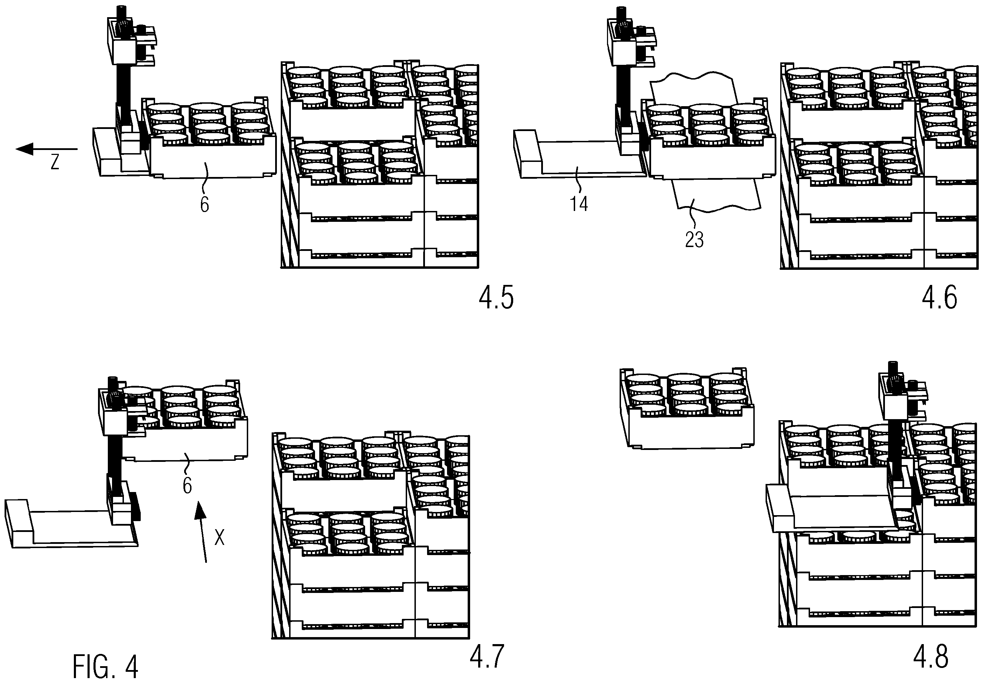

Fig. 4 zeigt in mehreren Darstellungen die Vorrichtung 9 beim Depalettieren von Einweggebinden 6 mit jeweiligen Stapelnasen 7 im Eckbereich der Einweggebinde 6.

Wie es anhand der Darstellung 4.1 ersichtlich ist, wird die Vorrichtung 9 so an eine Seitenwand 20 des Einweggebindes 6 herangeführt, dass die Saugmittel 13 an der Seitenwand 20 zur Anlage kommen. Mittels einer nicht näher dargestellten Pumpe kann zwischen den Saugmitteln 13 und der Seitenwand 20 Unterdruck erzeugt werden, sodass die Seitenwand 20 und damit das Einweggebinde 6 ohne die Ausbildung einer Druckkraft auf die Seitenwand 20 mit einer Haltekraft beaufschlagt werden kann die ausreichend groß ist, sodass über ein Anheben der Halteeinrichtung 11 mit der daran ausgebildeten Saugeinrichtung 12 mit den Saugmitteln 13 ein Zwischenraum 21 zwischen dem zu depalettierenden Einweggebinde 6 und dem darunter angeordneten weiteren Einweggebinde 6 ausgebildet werden kann.

Wie es anhand der Darstellung 4.3 ersichtlich ist, gelangen dabei die der Vorrichtung zugewandten vorderen Stapelnasen 7 außer Eingriff und die Unterfahrplatte oder Trageplatte 14 kann in den Zwischenraum 21 verschoben werden, bis das zu depalettierende Einweggebinde 6 an der Unterfahrplatte oder Trageplatte 14 aufliegt, wie dies in der Darstellung 4.4 der Fig. 4 ersichtlich ist. Die Platte 14 wird dabei so weit unter die Unterseite oder untere Fläche 22 des Einweggebindes 6 geschoben, bis der Schwerpunkt des Einweggebindes 6 mit den darin befindlichen Obst- oder Gemüseprodukten auf der Platte 14 zu liegen kommt, dabei gelangen auch die hinteren Stapelnasen 7 außer Eingriff.

Wie es anhand der Darstellung 4.3 ersichtlich ist, nimmt die Saugeinrichtung 12 zur Seitenwand 20 des Einweggebindes 6 eine zusammen mit der Seitenwand 20 schräggestellte Konfiguration ein, d. h. die Saugeinrichtung 12 kann zusammen mit der sich durch das Anheben des Einweggebindes 6 winkeligen einstellenden Konfiguration der Seitenwand 20 mit bewegen, sich also im Winkel relativ zur Hochachsrichtung der Träger 16 verändern, sodass weiterhin trotz der Winkelveränderung der Seitenwand 20 relativ zur Hochachsrichtung der Träger 16 eine geringe Unterdruckbeaufschlagung zum Halten der Seitenwand 20 ausreichend ist.

Sobald sich das Gebinde 6 auf der Trageplatte 14 angeordnet befindet, kann die Vorrichtung 9 in Z-Richtung verlagert werden und zwar so, dass das Einweggebinde 6 über einem in der Darstellung 4.6 schematisch mit dem Bezugszeichen 23 dargestellten Förderband 23 zu liegen kommt. Sodann kann die Trageplatte 14 unter dem Einweggebinde 6 weggezogen werden und zwar wieder in Z-Richtung und die Unterdruckbeaufschlagung der Saugeinrichtung 12 aufgehoben werden, das depalettierte Einweggebinde 6 wird, wie dies in der Darstellung 4.7 der Fig. 4 ersichtlich ist, in X-Richtung weg befördert und die Vorrichtung 9 ist, wie dies in der Darstellung 4.8 ersichtlich ist, zum nächsten Depalettiervorgang bereit und kann mit der Saugeinrichtung 12 in Richtung zur Seitenwand eines dem soeben depalettierten Gebinde 6 benachbarten weiteren Gebinde 6 bewegt werden und der Vorgang des Depalettierens dieses nächsten Gebindes 6 durchgeführt werden.

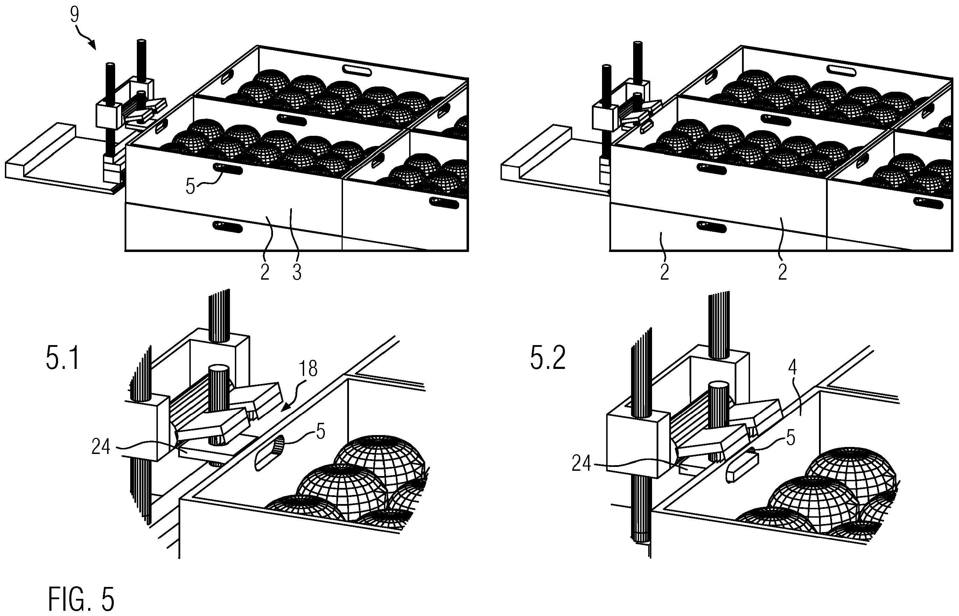

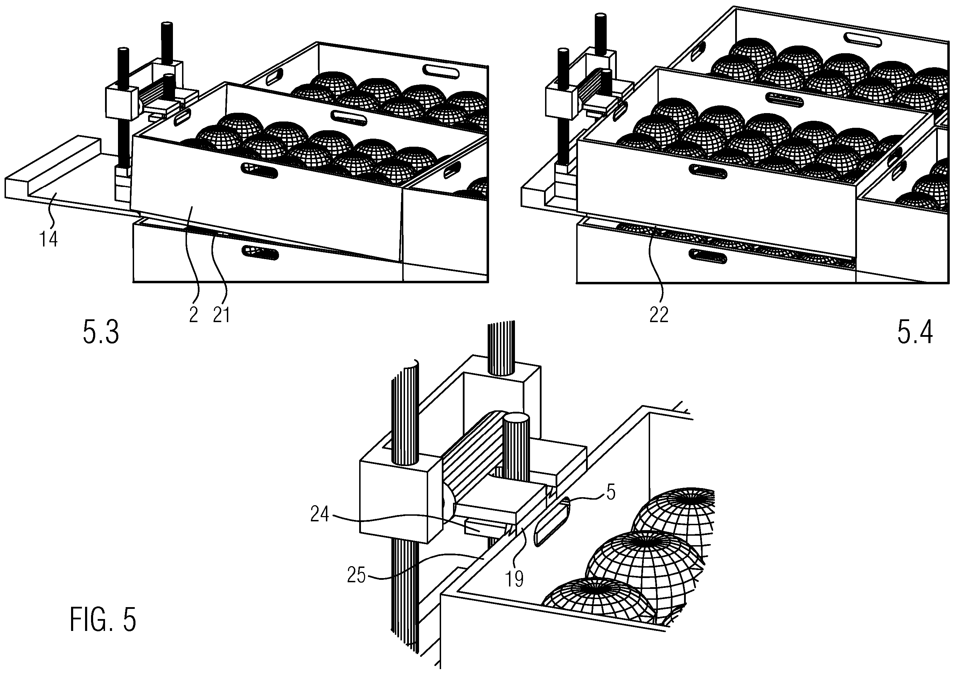

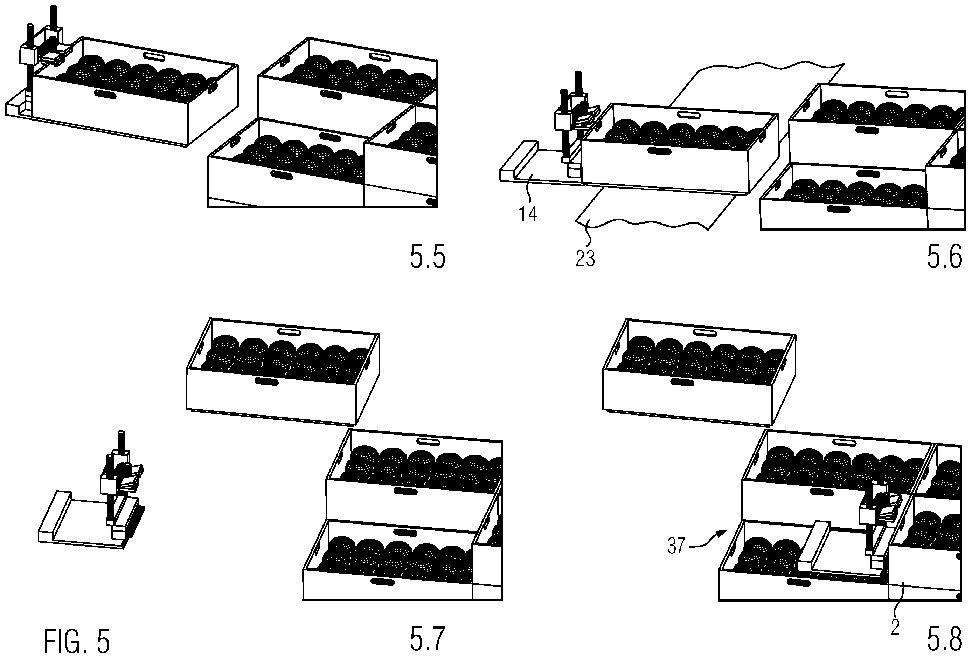

Fig. 5 der Zeichnung zeigt in mehreren Darstellungen den Vorgang des Depalettierens von Mehrweggebinden 2, welche jeweils Querseitenwände 4 mit Handgriffausnehmungen 5 aufweisen. Wie es anhand der Darstellungen der Fig. 5 ersichtlich ist, besitzen die Mehrweggebinden 2 auch an den Längsseitenwänden 3 entsprechende Handgriffausnehmungen 5, sodass mit der erfindungsgemäßen Vorrichtung 9 auch ein Depalettieren der Mehrweggebinde 2 von den Längsseitenwänden 3 aus möglich ist.

Wie es anhand der Darstellung 5.1 ersichtlich ist, wird die Vorrichtung 9 an die Querseitenwand 4 des Gebindes 3 in der oberen Gebindelage heran bewegt und dabei über eine Sensoreinrichtung die Position der Handgriffausnehmung 5 erfasst und die Eingriffseinrichtung 18 mit dem Greiffinger 24 in einer solchen Höhe in Y-Richtung positioniert, dass der Greiffinger 24 über eine translatorische Bewegung in Z-Richtung in die Handgriffausnehmung 5 hinein bewegt werden kann, bis der Greiffinger 24 die Handgriffausnehmung 5 durchsetzt, wie dies anhand der Darstellung 5.2 der Fig. 5 ersichtlich ist.

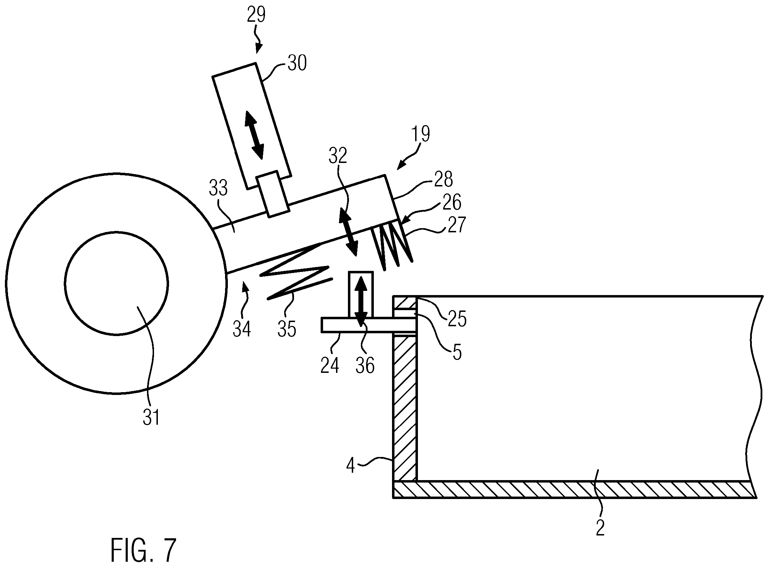

In einem nächsten Schritt wird, wie dies anhand der Darstellung 5.3 der Fig. 5 ersichtlich ist, das Haltemittel 19 auf den oberen Rand 25 der Querseitenwand 4 abgesenkt, bis das anhand von Fig. 7 der Zeichnung ersichtliche elastisch ausgebildete Auflagemittel 26 in der Form einer Gummilippe 27 am oberen Rand 25 aufliegt.

Die Gummilippe 27 kann den Rand 25 von oben her mit einer Haltekraft beaufschlagen, wobei etwaige vorhandene Verformungen des Randbereichs des Rands 25 durch die Elastizität der Gummilippe 27 ausgeglichen werden können.

Wie es anhand von Fig. 7 der Zeichnung weiter ersichtlich ist, wird hierzu das mit der Gummilippe 27 versehene Haltemittel 19 in der Form eines Schwenkhalters 28 über einen Aktuator 29 in der Form eines Pneumatikzylinders 30 in einer Schwenkbewegung an der Schwenkachse 31 auf den Rand 25 des Mehrweggebindes 2 abgesenkt, wie dies anhand des Doppelpfeils 32 ersichtlich ist.

Das Haltemittel 19 der in Fig. 7 dargestellten Vorrichtung 9 besitzt eine Aufnahmeplatte 34 in der Form eines Auslegers 33, an dem am vorderen Randbereich die Gummilippe 27 angeordnet ist und an einer unteren Seite 35 des Auslegers 33 ist eine schematisch dargestellte Federeinrichtung 35 vorgesehen, welche als Anschlagdämpfer und an dem sich in der Handgriffausnehmung 5 befindlichen Greiffinger 24 von oben her sanft zur Auflage kommen kann, sodass der Rand 25 zwischen dem in Y-Richtung zum Anheben des Gebindes 2 bewegbaren Gebinde, wie dies anhand des Doppelpfeils 36 ersichtlich ist, und der Gummilippe 27 geklemmt werden kann, ohne dass auf die Querseitenwand 4 eine Druckkraft ausgeübt wird, und somit auch keine Beschädigung der im Gebinde 2 befindlichen Obst- und Gemüseprodukte stattfinden kann.

Die Darstellung 5.3 zeigt, dass in den durch das Anheben des Gebindes 2 relativ zu dem darunter angeordneten Gebinde 2 ein Zwischenraum 21 ausgebildet wird, in den die Trageplatte oder Unterfahrplatte 14 bewegt werden kann, bis diese die in der Darstellung 5.4 ersichtliche Lage relativ zur Unterseite 22 des Gebindes einnimmt und das Gebinde so vollständig von dem darunter befindlichen weiteren Gebinde abgehoben ist.

In einem nächsten Schritt kann das sich auf der Trageplatte 14 befindliche Gebinde durch eine Verlagerungsbewegung der das Gebinde tragenden Vorrichtung 9 vom Gebindestapel separiert werden, wie dies anhand der Darstellung 5.5 der Fig. 5 ersichtlich ist und sodann die Trageplatte 14 durch eine entsprechende Verlagerungsbewegung gemäß der Darstellung 5.6 nach links von der Unterseite 22 des Gebindes 2 weggezogen werden, sodass das Gebinde 2 an dem Förderband 23 zur Auflage kommt und von diesem zur weiteren Handhabung befördert wird, wie dies anhand der Darstellung 5.7 der Fig. 5 der Zeichnung ersichtlich ist.

Die Darstellung 5.8 der Fig. 5 schließlich zeigt, dass nun eine nächste Depalettierung stattfinden kann und zwar hinsichtlich des zum soeben depalettierten Gebinde 2 benachbarten Gebinde 2, wozu die Vorrichtung den durch das Depalettieren des soeben depalettierten Gebindes 2 freigewordenen Raum 37 nutzt und in Z-Richtung bis zur Erfassung der Handgriffausnehmung 5 des benachbarten Gebindes 2 verfahren werden kann.

Fig. 6 der Zeichnung zeigt eine schematisch dargestellte Klappbox 8 mit darin befindlichen Obst- und Gemüseprodukten und einer sich in Klemmstellung mit dem oberen Rand 25 und der Handgriffausnehmung 5 befindlichen Vorrichtung 9 nach der vorliegenden Erfindung. Da die Querseitenwände 4 der Klappbox 8 einklappbar ausgebildet sind, ist es von wesentlicher Bedeutung, dass diese Querseitenwände 4 nicht mit einer Druckkraft beaufschlagt werden, wie dies bei der eingangs erläuterten bekannten Vorrichtung der Fall ist, sodass die Gebindeart Klappbox von der bekannten Vorrichtung nicht gehandhabt werden kann. Im Gegensatz hierzu kann mit der erfindungsgemäßen Vorrichtung auch die zum Transport von Obst- und Gemüseprodukten üblicherweise verwendete Klappbox mit der erfindungsgemäßen Vorrichtung und nach dem erfindungsgemäßen Verfahren depalettiert werden.

Die Erfindung zeichnet sich dadurch aus, dass mit der erfindungsgemäßen Vorrichtung und nach dem erfindungsgemäßen Verfahren alle bekannten Gebindetypen automatisch depalettiert werden können, welche zum Transport von Obst- und Gemüseprodukten in Verteilerzentren und zum Weitertransport zum Verkauf an den Abnehmer der Obst- und Gemüseprodukten Verwendung finden.

Da diese Gebinde, je nachdem mit welchen Produkt sie befüllt sind, eine Eigenmasse von bis zu 20 kg aufweist können, sorgen die erfindungsgemäße Vorrichtung und das erfindungsgemäße Verfahren für eine wesentliche Erleichterung bei der Depalettierung der Gebinde und für ein schnelles Umsetzen und sehr kurze Verweilzeiten in den Verteilerzentren.

Dadurch, dass die Seitenwände der Gebinde durch die erfindungsgemäße Vorrichtung nicht mit einer in Richtung zum Innenraum des Gebindes gerichteten Klemmkraft oder Seitenkraft beaufschlagt werden, ist auch die Gefahr einer Beschädigung der empfindlichen Obst- und Gemüseprodukte beim Depalettieren beseitigt. Ebenso ist die Gefahr eines Aufreissens oder Eindrückens der Seitenwände des Gebindes beseitigt. Die jeweilige Lage der Handgriffausnehmungen des Gebindes können über eine Sensoreinrichtung exakt erfasst werden und der Greiffinger somit exakt in der Handgriffausnehmung positioniert werden.

Über das Anheben des Greiffingers mit dem auf dem oberen Rand des Gebindes aufliegenden Haltemittel kann das Gebinde ohne Seitenkraftbeaufschlagung der Gebindewände geklemmt werden und wird über die Unterfahrplatte von der Unterseite her abgestützt. In ähnlicher Weise werden Einweggebinde über die Unterfahrplatte von der Unterseite her abgestützt, sodass an den Gebinden vorhandene Zentrierlaschen oder Zentrierecken nicht beschädigt werden. Solche Einweggebinde werden durch die von der Saugeinrichtung aufgebrachten Saugkraft angehoben, indem die Saugeinrichtung zusammen mit dem Gebinde einseitig angehoben werden kann, bis die Trageplatte oder Unterfahrplatte in den Zwischenraum eingeführt wird und somit das Gebinde auf der Trageplatte oder Unterfahrplatte aufliegt. Durch das Lösen der Saugkraft und der Herausbewegung der Trageplatte oder Unterfahrplatte kann das Gebinde dann auf dem Wegfuhrband abgesetzt werden und ein etwaiger kurzer Blasimpuls kann eventuelle Verunreinigungen von der Saugeinrichtung entfernen.

Die auf diese Weise depalettierten Gebinde, seien dies Einweggebinde oder Mehrweggebinde oder auch Klappboxen mit den darin befindlichen Obst- und Gemüseprodukten werden zu einem Wegfuhrband bewegt und auf diesem abgesetzt, um zur weiteren Verteilung im Verteilerzentrum transportiert werden zu können.

Mit der Saugeinrichtung oder dem Greiffinger müssen die jeweiligen Gebinde nur um etwa 25 mm in Y Richtung angehoben werden und der sich somit einstellende Zwischenraum ist ausreichend, um die Unterfahrplatte oder Trageplatte in den Zwischenraum zur Abstützung des zu depalettierenden Gebindes von unten her einzuführen. Die Unterfahrplatte wird über den Schwerpunkt des Gebindes hinaus in Z-Richtung bewegt und auf diese Weise wird das Gebinde einerseits von unten her abgestützt und andererseits ein unbeabsichtigtes Lösen des Gebindes von der Unterfahrplatte während des Transports zum Wegfuhrband beseitigt.

Obwohl vorstehend von Stückgutgebinden gesprochen wurde, welche mit verderblichen Waren, wie insbesondere Obst- und Gemüseprodukten befüllt sind, ist dies nicht als Beschränkung auszulegen, da mit der erfindungsgemäßen Vorrichtung und dem erfindungsgemäßen Verfahren auch leere Stückgutgebinde depalettiert werden können, genauso wie auch Stückgutgebinde, die mit anderen Waren befüllt sind, wie beispielsweise Drogerieartikel oder Körperpflegeprodukte oder Waren aller anderer Art.

Hinsichtlich vorstehend im Einzelnen nicht näher erläuterter Merkmale der Erfindung wird in übrigen ausdrücklich auf die Patentansprüche und die Zeichnung verwiesen.

### Bezugszeichenliste

1. Palette
2. Mehrweggebinde
3. Längsseitenwand
4. Querseitenwand
5. Handgriffausnehmung
6. Einweggebinde
7. Stapelnase
8. Klappbox
9. Vorrichtung
10. Portalrobotersystem
11. Halteeinrichtung
12. Saugeinrichtung
13. Saugmittel
14. Trageplatte, Unterfahrplatte
15. Aufnahme
16. Träger
17. Querträger
18. Eingriffseinrichtung
19. Haltemittel
20. Seitenwand
21. Zwischenraum
22. Unterseite
23. Förderband
24. Greiffinger
25. Rand
26. Auflagemittel
27. Gummilippe
28. Schwenkhalter
29. Aktuator
30. Pneumatikzylinder
31. Schwenkachse
32. Doppelpfeil
33. Ausleger
34. Aufnahmeplatte
35. Federeinrichtung
36. Doppelpfeil
37. Raum
38. Depalettieranordnung
39. Portal, Tragstruktur
40. Manipulator
41. Drehaufnahme, Drehkopf
42. Regalreihe
43. Regalreihe
44. Palettenstapel
45. Lagergasse
46. Träger
47. Tragarm
48. erste Reihe
49. zweite Reihe
Pfeil R Drehbewegung
Pfeil Z1 Verfahrbewegung in Z-Richtung
Pfeil Z2 Verfahrbewegung in Z-Richtung

## Patentansprüche

1. Depalettieranordnung (38) mit einer Vorrichtung (9) zum Depalettieren von stapelbaren Stückgutgebinden (2, 6), wobei die Vorrichtung (9) eine Halteeinrichtung (11) mit daran angeordneten und zum lösbaren Saugeingriff mit einer Seitenwand (3, 4) des Gebindes (2, 6) ausgebildete Saugmittel (12, 13) und eine relativ zur Halteeinrichtung (11) bewegbare Trageplatte (14) zur Unterstützung des Gebindes (2, 6) aufweist, und eine Aufnahme (15) mit mindestens einem Träger (16) besitzt, an der die Halteeinrichtung (11) angeordnet ist und die Vorrichtung (9) eine Eingriffseinrichtung (18) aufweist, die zum lösbaren Eingriff mit einer Ausnehmung (5) einer Seitenwand (3, 4) des Gebindes (2, 6) ausgebildet ist, **dadurch gekennzeichnet, dass** die Depalettieranordnung (38) einen Manipulator (40) mit einer Tragstruktur (39) aufweist und an der Tragstruktur (39) eine relativ dazu drehbar angeordnete Drehaufnahme (41) angeordnet ist und die Vorrichtung (9) an der Drehaufnahme (41) relativ zum Manipulator (40) bewegbar angeordnet ist, wobei die Eingriffseinrichtung (18) an der Aufnahme (15) angeordnet ist und relativ zur Trageplatte (14) in Hochachsrichtung bewegbar ausgebildet ist.

2. Depalettieranordnung (38) nach Anspruch 1, **dadurch gekennzeichnet, dass** die Tragstruktur (39) einen in Hochachsrichtung der Tragstruktur (39) bewegbaren Träger (46) aufweist, an dem ein in Längsrichtung des Trägers (46) bewegbarer Tragarm (47) angeordnet ist und die Drehaufnahme (41) mit der Vorrichtung (9) relativ zum Tragarm (47) drehbar angeordnet ist.

3. Depalettieranordnung (38) nach Anspruch 1 oder 2, **dadurch gekennzeichnet, dass** die Drehaufnahme (41) mit der Vorrichtung (9) relativ zur Tragstruktur (39) in Längsrichtung der Tragstruktur (39) bewegbar ausgebildet ist.

4. Depalettieranordnung (38) nach Anspruch 2 oder 3, **dadurch gekennzeichnet, dass** die Drehaufnahme (41) mit der Vorrichtung (9) relativ zum Tragarm (47) in Längsrichtung des Tragarms (47) bewegbar ausgebildet ist.

5. Depalettieranordnung (38) nach einem der vorstehenden Ansprüche, **dadurch gekennzeichnet, dass** die Tragstruktur (39) wenigstens zwei benachbart zueinander angeordnete Vorrichtungen (9) aufweist, welche gemeinsam oder getrennt voneinander betätigbar ausgebildet sind.

6. Depalettieranordnung (38) nach einem der vorstehenden Ansprüche, **dadurch gekennzeichnet, dass** der Manipulator (40) relativ zu einer den Manipulator (40) tragenden Aufnahme bewegbar ausgebildet ist.

7. Depalettieranordnung (38) nach einem der Ansprüche 2 bis 6, **dadurch gekennzeichnet, dass** der Tragarm (47) und die Drehaufnahme (41) unabhängig voneinander in Längsrichtung des Trägers (46) bewegbar ausgebildet sind.

8. Depalettieranordnung (38) nach einem der vorstehenden Ansprüche, **dadurch gekennzeichnet, dass** die Eingriffseinrichtung (18) in mindestens eine Ebenenrichtung einer sich weitgehend im rechten Winkel zum Träger (16) erstreckenden Ebene bewegbar ausgebildet ist.

9. Depalettieranordnung (38) nach einem der vorstehenden Ansprüche, **dadurch gekennzeichnet, dass** die Eingriffseinrichtung (18) ein Eingriffsmittel (24) aufweist, das zum Eingriff mit einer Handgriffausnehmung (5) einer Seitenwand (3, 4) des Gebindes (2, 6) ausgebildet ist.

10. Depalettieranordnung (38) nach Anspruch 9, **dadurch gekennzeichnet, dass** das Eingriffsmittel (24) relativ zur Handgriffausnehmung (5) des Gebindes (2, 6) bewegbar ausgebildet ist derart, dass das Eingriffsmittel (24) in die Handgriffausnehmung (5) und diese zumindest teilweise durchsetzend bewegbar ist und aus der Handgriffausnehmung (5) heraus bewegbar ausgebildet ist.

11. Depalettieranordnung (38) nach einem der vorstehenden Ansprüche, **gekennzeichnet durch** mindestens ein Haltemittel (19), welches zur lösbaren Anordnung an einem oberen Randbereich (25) des Gebindes (2, 6) ausgebildet ist.

12. Depalettieranordnung (38) nach Anspruch 11, **dadurch gekennzeichnet dass** das Haltemittel (19) eine streifenförmige oder leistenförmige Konfiguration aufweist und an einem zum Kontakt mit dem oberen Randbereich (25) des Gebindes (2, 6) ausgebildeten Bereich mit einem elastisch ausgebildeten Auflagemittel (26, 27) versehen ist.

13. Depalettieranordnung (38) nach Anspruch 11 oder 12, **dadurch gekennzeichnet, dass** das Haltemittel (19) an einem an der Aufnahme (15) vorgesehenen Querträger (17) angeordnet ist und mittels eines Aktuators (29) zur lösbaren Anordnung an dem streifenförmigen oder leistenförmigen Randbereich (25) des Gebindes (2, 6) betätigbar ist.

14. Depalettieranordnung (38) nach einem der Ansprüche 11 bis 13, **dadurch gekennzeichnet, dass** das Haltemittel (19) entlang einer weitgehend quer zur Aufnahme (15) vorgesehenen Schwenkachse (31) angeordnet ist und mittels eines Aktuators (29) zur lösbaren Anordnung an dem streifenförmigen oder leistenförmigen Randbereich (25) des Gebindes (2, 6) an der Schwenkachse (31) verschwenkbar betätigbar ist.

15. Depalettieranordnung (38) nach einem der Ansprüche 11 bis 14, **dadurch gekennzeichnet, dass** das Haltemittel (19) eine sich von der Aufnahme (15) weg erstreckende Aufnahmeplatte (34) aufweist, an welcher das Auflagemittel (26, 27) angeordnet ist.

16. Depalettieranordnung (38) nach einem der Ansprüche 13 bis 15, **dadurch gekennzeichnet, dass** der Aktuator (29) eine pneumatisch betätigbare Kolbenzylindereinheit (30) aufweist, mittels der das Haltemittel (19) an dem streifenförmigen oder leistenförmigen Randbereich (25) des Gebindes (2, 6) lösbar in Anlage bringbar ist.

## Claims

1. Depalletizing arrangement (38) having an apparatus (9) for depalletizing stackable parcelled goods containers (2, 6), wherein the apparatus (9) has a holding device (11) having suction means (12, 13) that are arranged thereon and that are designed for releasable suction engagement with a side wall (3, 4) of the container (2, 6), and said apparatus has a support plate (14) for supporting the container (2, 6), that is to be moved relative to the holding device (11), and said apparatus includes a receptacle (15) having at least one support (16), on which the holding device (11) is arranged, and the apparatus (9) has an engagement device (18), which is designed for releasable engagement with a cutout (5) of a side wall (3, 4) of the container (2, 6), **characterised in that** the depalletizing arrangement (38) has a manipulator (40) having a support structure (39), and a rotary receptable (41) arranged to be rotatable relative thereto is arranged on the support structure (39) and the apparatus (9) is arranged on the rotary receptable (41) to be moveable relative to the manipulator (40), wherein the engagement device (18) is arranged on the receptacle (15) and is designed to be moveable relative to the support plate (14) in the vertical direction.

2. Depalletizing arrangement (38) according to claim 1, **characterised in that** the support structure (39) has a support (46) that is to be moved in the vertical direction of the support structure (39), on which a support arm (47) is arranged to be moveable in the longitudinal direction of the support (46), and on which the rotary receptable (41) with the apparatus (9) is arranged to be rotatable relative to the support arm (47).

3. Depalletizing arrangement (38) according to claim 1 or 2, **characterised in that** the rotary receptable (41) with the apparatus (9) is designed to be moveable relative to the support structure (39) in the longitudinal direction of the support structure (39).

4. Depalletizing arrangement (38) according to claim 2 or 3, **characterised in that** the rotary receptable (41) with the apparatus (9) is designed to be moveable relative to the support arm (47) in the longitudinal direction of the support arm (47).

5. Depalletizing arrangement (38) according to one of the preceding claims, **characterised in that** the support structure (39) has at least two apparatuses (9) arranged adjacent to one other, which are designed to be actuated together or separately from one other.

6. Depalletizing arrangement (38) according to one of the preceding claims, **characterised in that** the manipulator (40) is designed to be moveable relative to a receptacle supporting the manipulator (40).

7. Depalletizing arrangement (38) according to one of claims 2 to 6, **characterised in that** the support arm (47) and the rotary receptable (41) are designed to be moveable independently of one other in the longitudinal direction of the support (46).

8. Depalletizing arrangement (38) according to one of the preceding claims, **characterised in that** the engagement device (18) is designed to be moveable in at least one plane direction of a plane extending largely at a right angle to the support (16).

9. Depalletizing arrangement (38) according to one of the preceding claims, **characterised in that** the engagement device (18) has an engagement means (24), which is designed for engaging with a hand grip cutout (5) of a side wall (3, 4) of the container (2, 6).

10. Depalletizing arrangement (38) according to claim 9, **characterised in that** the engagement means (24) is designed to be moveable relative to the hand grip cutout (5) of the container (2, 6) in such a way that the engagement means (24) is to be moved into the hand grip cutout (5) and at least partially through it, and said engagement means is designed to be removeable from the hand grip cutout (5).

11. Depalletizing arrangement (38) according to one of the preceding claims, **characterised by** at least one holding means (19) which is designed for releasable arrangement to an upper edge region (25) of the container (2, 6).

12. Depalletizing arrangement (38) according to claim 11, **characterised in that** the holding means (19) has a strip-shaped or bar-shaped configuration and is provided with an elastically designed support means (26, 27) at a region designed for contact with the upper edge region (25) of the container (2, 6).

13. Depalletizing arrangement (38) according to claim 11 or 12, **characterised in that** the holding means (19) is arranged on a transverse support (17) provided on the receptacle (15) and is to be actuated by means of an actuator (29) for releasable arrangement on the strip-shaped or bar-shaped edge region (25) of the container (2, 6).

14. Depalletizing arrangement (38) according to one of claims 11 to 13, **characterised in that** the holding means (19) is arranged along a pivot axis (31) provided largely transverse to the receptacle (15) and is to be actuated to be pivotable on the pivot axis (31) by means of an actuator (29) for releasable arrangement on the strip-shaped or bar-shaped edge region (25) of the container (2, 6).

15. Depalletizing arrangement (38) according to one of claims 11 to 14, **characterised in that** the holding means (19) has a receptacle plate (34) extending away from the receptacle (15), on which the support means (26, 27) is arranged.

16. Depalletizing arrangement (38) according to one of claims 13 to 15, **characterised in that** the actuator (29) has a pneumatically actuated piston cylinder unit (30), by means of which the holding means (19) is to be releasably applied to the strip-shaped or bar-shaped edge region (25) of the container (2, 6).

## Revendications

1. Système de dépalettisation (38) comportant un dispositif (9) pour dépalettiser des bacs de marchandise de détail (2, 6) gerbables, le dispositif (9) présentant un dispositif de retenue (11), doté de moyens à effet ventouse (12, 13) agencés sur celui-ci et conçus pour un contact réversible par effet ventouse avec une paroi latérale (3, 4) du bac (2, 6), et une plaque de support (14) mobile par rapport au dispositif de retenue (11) pour supporter le bac (2, 6), et le dispositif (9) comportant un réceptacle (15) pourvu d'au moins un support (16) sur lequel est agencé le dispositif de retenue (11), et comportant un dispositif de mise en prise (18) conçu pour la mise en prise réversible avec un évidement (5) présent dans une paroi latérale (3, 4) du bac (2, 6) ; **caractérisé en ce que** le système de dépalettisation (38) présente un manipulateur (40) pourvu d'une structure de support (39), un réceptacle rotatif (41) est agencé sur la structure de support (39) de manière à être en mesure de tourner par rapport à celle-ci et le dispositif (9) est agencé sur le réceptacle rotatif (41) de manière mobile par rapport au manipulateur (40), ledit dispositif de mise en prise (18) étant agencé sur le réceptacle (15) et étant conçu mobile par rapport à la plaque de support (14) dans la direction de l'axe vertical.

2. Système de dépalettisation (38) selon la revendication 1, **caractérisé en ce que** la structure de support (39) présente un support (46) qui est mobile dans la direction de l'axe vertical de la structure de support (39) et sur lequel est agencé un bras de support (47) mobile dans la direction longitudinale du support (46), et le réceptacle rotatif (41) avec le dispositif (9) est agencé rotatif par rapport au bras de support (47).

3. Système de dépalettisation (38) selon la revendication 1 ou 2, **caractérisé en ce que** le réceptacle rotatif (41) avec le dispositif (9) est conçu mobile par rapport à la structure de support (39) dans la direction longitudinale de la structure de support (39).

4. Système de dépalettisation (38) selon la revendication 2 ou 3, **caractérisé en ce que** le réceptacle rotatif (41) avec le dispositif (9) est conçu mobile par rapport au bras de support (47) dans la direction longitudinale du bras de support (47).

5. Système de dépalettisation (38) selon l'une des revendications précédentes, **caractérisé en ce que** la structure de support (39) présente au moins deux dispositifs (9) agencés adjacents l'un à l'autre et conçus pour être actionnables conjointement ou séparément l'un de l'autre.

6. Système de dépalettisation (38) selon l'une des revendications précédentes, **caractérisé en ce que** le manipulateur (40) est conçu mobile par rapport à un réceptacle portant le manipulateur (40).

7. Système de dépalettisation (38) selon l'une des revendications 2 à 6, **caractérisé en ce que** le bras de support (47) et le réceptacle rotatif (41) sont conçus mobiles dans la direction longitudinale du support (46) indépendamment l'un de l'autre.

8. Système de dépalettisation (38) selon l'une des revendications précédentes, **caractérisé en ce que** le dispositif de mise en prise (18) est conçu mobile dans au moins une direction d'un plan s'étendant majoritairement perpendiculairement au support (16).

9. Système de dépalettisation (38) selon l'une des revendications précédentes, **caractérisé en ce que** le dispositif de mise en prise (18) présente un moyen de mise en prise (24) qui est conçu pour venir en prise avec un évidement de poignée (5) ménagé dans une paroi latérale (3, 4) du bac (2, 6).

10. Système de dépalettisation (38) selon la revendication 9, **caractérisé en ce que** le moyen de mise en prise (24) est conçu mobile par rapport à l'évidement de poignée (5) du bac (2, 6) de telle façon que le moyen de mise en prise (24) est conçu mobile pour pénétrer au moins partiellement dans l'évidement de poignée (5) et pour sortir de l'évidement de poignée (5).

11. Système de dépalettisation (38) selon l'une des revendications précédentes, **caractérisé par** au moins un moyen de retenue (19) conçu pour être agencé de manière amovible sur une zone de bord supérieure (25) du bac (2, 6).

12. Système de dépalettisation (38) selon la revendication 11, **caractérisé en ce que** le moyen de retenue (19) présente une configuration en forme de bande ou de baguette et est pourvu d'un moyen de butée (26, 27) élastique dans une zone conçue pour entrer en contact avec la zone de bord supérieure (25) du bac (2, 6).

13. Système de dépalettisation (38) selon la revendication 11 ou 12, **caractérisé en ce que** le moyen de retenue (19) est agencé sur une traverse (17) prévue sur le réceptacle (15) et est actionnable au moyen d'un actionneur (29) pour être disposé de manière réversible sur la zone de bord (25) en forme de bande ou de baguette du bac (2, 6).

14. Système de dépalettisation (38) selon l'une des revendications 11 à 13, **caractérisé en ce que** le moyen de retenue (19) est agencé le long d'un axe de pivotement (31) majoritairement transversal au réceptacle (15) et est actionnable au moyen d'un actionneur (29) pour pivoter sur l'axe de pivotement (31) pour être disposé de manière réversible sur la zone de bord (25) en forme de bande ou de baguette du bac (2, 6).

15. Système de dépalettisation (38) selon l'une des revendications 11 à 14, **caractérisé en ce que** le moyen de retenue (19) présente une plaque de réception (34) qui va en s'éloignant du réceptacle (15) et sur laquelle est agencé le moyen de butée (26, 27).

16. Système de dépalettisation (38) selon l'une des revendications 13 à 15, **caractérisé en ce que** l'actionneur (29) présente une unité piston-cylindre (30) à commande pneumatique au moyen de laquelle le moyen de retenue (19) est en mesure d'être amené, de manière réversible, en contact avec la zone de bord (25) en forme de bande ou de baguette du bac (2, 6).
